(19) Europäisches Patentamt
European Patent Office
Office européen des brevets

(11) **EP 3 540 627 B1**

(12) **FASCICULE DE BREVET EUROPEEN**

(45) Date de publication et mention de la délivrance du brevet:
**26.05.2021 Bulletin 2021/21**

(51) Int Cl.:
**G06F 21/60** (2013.01)

(21) Numéro de dépôt: **19158163.6**

(22) Date de dépôt: **19.02.2019**

(54) **PROCÉDÉ DE SÉLECTION DE PROFILS D'ENCODAGE D'UN CONTENU MULTIMÉDIA POUR UNE DIFFUSION À LA DEMANDE**

AUSWAHLVERFAHREN DER KODIERPROFILE EINES MULTIMEDIA-INHALTS FÜR EINE SENDUNG AUF ANFRAGE

METHOD FOR SELECTING PROFILES FOR ENCODING OF MULTIMEDIA CONTENT FOR ON-DEMAND BROADCAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2018 FR 1852131**

(43) Date de publication de la demande:
**18.09.2019 Bulletin 2019/38**

(73) Titulaire: **ATEME**
**78140 Velizy Villacoublay (FR)**

(72) Inventeur: **GUIONNET, Thomas**
**35000 Rennes (FR)**

(74) Mandataire: **Plasseraud IP**
**66, rue de la Chaussée d'Antin**
**75440 Paris Cedex 09 (FR)**

(56) Documents cités:
**WO-A1-2016/022769      US-A1- 2015 074 232**

**Description**

Le domaine de l'invention se rapporte à la sélection de profils d'encodage, ou profils de compression, d'un contenu multimédia en vue d'une diffusion à la demande à au moins un terminal de réception.

Au cours des dernières années, la distribution de la télévision numérique a connu plusieurs évolutions. De nouveaux services audiovisuels tels que la vidéo à la demande (VOD) ou la télévision de rattrapage (Catch-Up TV) se sont développés et ont conduit au développement d'infrastructures réseaux offrant une bande passante plus large afin de faciliter la fourniture de tels services en plus de la distribution télévisuelle traditionnelle (Broadcast).

Ces évolutions ont entraîné la création d'un nouveau type de services, appelé services OTT (Over-The-Top) ou services par contournement, assurant la livraison multi-écrans de contenus multimédias (vidéo et audio notamment) sur Internet. La participation d'un opérateur de réseau traditionnel dans le contrôle de la distribution du contenu est superflue pour que les services OTT fonctionnent. Ainsi, les services OTT sont fournis par l'intermédiaire de réseaux dits non managés, c'est-à-dire des réseaux dont la qualité de service (QoS) ou la bande passante varie pour chaque client et varie dans le temps.

La fourniture de services OTT fonctionne en point à point, chaque client disposant de sa propre connexion pour télécharger les contenus multimédias. Aussi, lorsque le nombre de clients augmente, la bande passante consommée augmente également ce qui entraine une surcharge des équipements amonts des fournisseurs de services OTT et aussi une surcharge des réseaux avals de distribution jusqu'à l'utilisateur final.

Cette surcharge est notamment accentuée par la multiplicité des formats de distribution des contenus multimédias qui obligent les fournisseurs de services OTT à conserver et gérer plusieurs versions d'un même contenu sous différents formats.

La multiplicité des formats, aussi appelé profils, est due à l'hétérogénéité des conditions possibles de diffusion d'un contenu multimédia. Ainsi, les contraintes matérielles, la bande passante disponible, l'état de la connexion pour télécharger et diffuser les contenus multimédias sont autant de paramètres variables d'un client à un autre expliquant la nécessité d'une multiplicité des profils disponibles pour un même contenu multimédia.

Une autre raison expliquant la nécessité de conserver un nombre important de profils disponibles est l'exigence d'une transition douce et aussi imperceptible que possible entre deux profils adjacents. En effet, pour un même utilisateur, les conditions de diffusion peuvent tout à fait évoluer au cours de la diffusion, en se dégradant ou en s'améliorant, de sorte que le lecteur de diffusion peut passer d'un profil à un autre pour s'adapter aux variations des conditions. Par exemple, si la connexion du client au cours de la diffusion s'améliore, le lecteur de diffusion pourra passer à un profil d'une qualité supérieure.

Le document US 2015/074232 A1 concerne un système de gestion d'une plateforme de streaming adaptatif permettant une allocation de la bande-passante en fonction des capacités des lecteurs vidéo des clients.

Le document WO 2016/022769 A1 décrit l'administration d'une plateforme de fourniture de contenus vidéo, dans le contexte du streaming adaptatif, s'adaptant aux conditions du réseau pour améliorer l'utilisation de la bande-passante.

Cependant, un nombre trop important de profils pose un problème de stockage et d'utilisation de la bande de passante. En effet, pour chaque profil existant, le fournisseur de service OTT est contraint de conserver la version du contenu multimédia correspondant au profil en question.

La présente invention vient améliorer la situation. Elle est définie par les revendications indépendantes ci-jointes.

Il est proposé ici un procédé mis en œuvre par des moyens informatiques en vue d'encoder numériquement un contenu multimédia en un ou plusieurs flux vidéo pour une diffusion à la demande à au moins un terminal de réception. Le procédé comprend les étapes suivantes :

- à partir d'un ensemble donné de profils, chaque profil étant caractérisé par une valeur d'au moins un paramètre d'encodage, former un ou plusieurs groupes ordonnés de profils, un même profil pouvant être présent dans plusieurs groupes, de sorte que, dans chaque groupe, chaque profil et son successeur immédiat vérifient une première condition prédéterminée, et
- sélectionner parmi les groupes formés au moins un groupe de profils vérifiant une deuxième condition prédéterminée.

Selon un aspect de l'invention, la première condition prédéterminée est relative à une continuité entre chaque profil et son successeur immédiat, cette continuité concernant des valeurs de paramètre d'encodage respectives du profil et du successeur immédiat.

Comme expliqué précédemment, la formation puis la sélection d'un ou plusieurs groupes de profils permet, lors de la diffusion du contenu multimédia, de pouvoir passer d'un profil à un autre et donc d'un niveau de qualité à un autre. Il est par ailleurs avantageux d'avoir une transition presque imperceptible d'un profil à un autre. Cette transition plus douce est obtenue par l'application d'une première condition prédéterminée relative à une continuité entre chaque profil et son successeur immédiat. En effet, il est nécessaire pour améliorer l'expérience d'un utilisateur visionnant le contenu multimédia que la transition d'un profil à un autre soit la plus imperceptible possible. Cette imperceptibilité est par ailleurs liée aux valeurs des différents paramètres d'encodage de chaque profil.

Selon un aspect de l'invention, l'étape de formation d'un ou plusieurs groupes de profils est mise en œuvre de sorte que, dans chaque groupe de profils formé, chaque profil a nécessairement un prédécesseur et un successeur sauf en cas d'impossibilité liée à la première condition prédéterminée.

Un tel mode de réalisation permet de former des groupes de profils plus complets et notamment des groupes de profils comprenant un certain nombre de profils. En effet, les conditions de diffusions du contenu multimédia peuvent varier au cours du temps pour un même terminal de réception et il est donc parfois nécessaire de transiter régulièrement d'un profil à un autre.

Dans un ou plusieurs modes de réalisation, l'étape de formation d'un ou plusieurs groupes ordonnés de profils comprend :

- construire un graphe orienté comprenant un ensemble de nœuds et un ensemble d'arcs de sorte que chaque nœud correspond à un profil de l'ensemble de profils, et de sorte qu'un premier nœud est relié à un second nœud par un arc, l'arc en question ayant le premier nœud pour origine et le second nœud pour extrémité, si et seulement si les profils respectivement associés aux premier et second nœuds vérifient la première condition prédéterminée,
- sélectionner un ou plusieurs chemins dudit graphe orienté de sorte que chaque chemin comprend un nœud de demi-degré extérieur nul, et
- former un ou plusieurs groupes ordonnés de profils, chaque groupe correspondant à un chemin sélectionné, de sorte qu'un profil et son successeur correspondent respectivement à un premier nœud et à un deuxième nœud reliés par un arc.

L'utilisation d'un graphe orienté est particulièrement utile lors de la formation des groupes de profils, notamment dans un souci d'exhaustivité. D'autre part, les méthodes d'optimisation sur graphe sont bien connues et sont parfaitement adaptées pour le cas où les nœuds du graphe orienté sont des profils. D'autre part, le graphe orienté peut s'avérer aussi utile lors de l'application de la deuxième condition prédéterminée et donc de la sélection de chemins du graphe orienté.

Selon un aspect de l'invention, un profil est caractérisé par deux valeurs de paramètre d'encodage : une résolution et un débit vidéo.

Définir un profil par une résolution et un débit vidéo permet d'obtenir une grande diversité de profils potentiels en faisant varier d'une part la résolution et d'autre part le débit vidéo.

Selon un autre aspect de l'invention, une valeur de distorsion est associée à tout couple de valeurs de résolution et de débit vidéo, la distorsion étant représentative d'une qualité vidéo obtenue après encodage du contenu multimédia selon le profil caractérisé par ces valeurs de résolution et de débit vidéo en un flux vidéo et décodage dudit flux vidéo.

La notion de « distorsion » permet de caractériser une qualité vidéo d'un profil d'encodage. La distorsion caractérise la qualité de reconstruction d'une image compressée, ici une image du flux vidéo après encodage puis décodage, par rapport l'image originale, ici l'image correspondante du contenu multimédia.

Dans un ou plusieurs modes de réalisation, l'étape de formation d'un ou plusieurs groupes ordonnés de profils est précédée d'une étape de filtrage comprenant :

- classer les profils de l'ensemble de profils par ordre décroissant de résolution de sorte que, si un ou plusieurs profils ont une même résolution, ces profils sont ordonnés entre eux par ordre décroissant de débit et/ou par ordre croissant de distorsion, et
- si, après classement, un premier profil est classé avant un deuxième profil de sorte que le deuxième profil a un débit vidéo supérieur au premier profil ou une distorsion inférieure au premier profil, supprimer le deuxième profil en question de l'ensemble de profils.

Cette étape de filtrage permet d'éviter des erreurs en amont de la sélection d'au moins un groupe de profils. Typiquement pour un débit vidéo donné, lorsque la résolution diminue, la qualité diminue et donc la distorsion augmente. De même pour une résolution donnée, lorsque le débit vidéo diminue, la distorsion augmente. Il s'agit donc au cours de cette étape de supprimer les profils incohérents, c'est-à-dire les profils allant à l'encontre des règles énoncées précédemment.

Dans un ou plusieurs modes de réalisation, la vérification de la première condition prédéterminée par un profil et son successeur immédiat dans un groupe de profils implique au moins que la résolution dudit successeur est inférieure ou égale à la résolution dudit profil, que le débit vidéo dudit successeur est inférieur ou égal au débit vidéo dudit profil, et que la distorsion dudit successeur est supérieure ou égale à la distorsion dudit profil.

Dans un ou plusieurs modes de réalisation, chaque profil est caractérisé au moins par un débit vidéo, et la vérification de la première condition prédéterminée par un profil et son successeur immédiat dans un groupe de profils implique au moins que le ratio du débit vidéo dudit profil et du débit vidéo dudit successeur est supérieur ou égal à un seuil minimal de ratio de débit vidéo et est inférieur ou égal à un seuil maximal de ratio de débit vidéo.

Comme expliqué précédemment, il est nécessaire lors de la diffusion du contenu multimédia qu'il soit possible de passer d'un profil d'encodage à un autre pour s'adapter aux conditions de diffusion liées au réseau. La vérification de la première condition prédéterminée permet de faciliter une transition cohérente d'un profil à un autre au moment de la diffusion.

Dans un ou plusieurs modes de réalisation, une qualité vidéo obtenue après encodage du contenu multimédia en un flux vidéo selon un profil donné et décodage dudit flux vidéo est caractérisée par une distorsion, et la vérification de la première condition prédéterminée par un profil et son successeur immédiat dans un groupe de profils implique au moins que le ratio de la distorsion dudit profil et de la distorsion dudit successeur est supérieur ou égal à un seuil minimal de ratio de distorsion et est inférieur ou égal à un seuil maximal de ratio de distorsion.

Là encore un tel mode de réalisation permet d'assurer que le groupe de profils formé et susceptible d'être sélectionné sera tel qu'une transition douce sera possible au cours de la diffusion du contenu multimédia lors du passage d'un profil d'une certaine qualité vidéo à un autre profil d'une qualité vidéo différente. L'affichage du contenu multimédia via le terminal de réception passera alors, conséquemment à l'évolution des conditions de diffusion, d'un profil à un autre.

Dans un ou plusieurs modes de réalisation, la vérification de la deuxième condition prédéterminée par un groupe de profils implique au moins que le groupe de profils en question comprend au moins un profil caractérisé par une valeur de paramètre vérifiant une contrainte de seuil dudit paramètre.

Selon un aspect de l'invention :

- l'au moins un profil est caractérisé par une résolution, et la vérification de la contrainte de seuil par l'au moins un profil implique que la résolution de l'au moins un profil est supérieure ou égale à une résolution minimale prédéterminée, et/ou
- l'au moins un profil est caractérisé par une résolution, et la vérification de la contrainte de seuil par l'au moins un profil implique que la résolution de l'au moins un profil est inférieure ou égale à une résolution maximale prédéterminée, et/ou
- l'au moins un profil est caractérisé par un débit vidéo, et la vérification de la contrainte de seuil par l'au moins un profil implique que le débit vidéo de l'au moins un profil est supérieur ou égal à un débit minimal prédéterminé, et/ou
- l'au moins un profil est caractérisé par un débit vidéo, et la vérification de la contrainte de seuil par l'au moins un profil implique que le débit vidéo de l'au moins un profil est inférieur ou égal à un débit maximal prédéterminé.

Il est avantageux que le panel de profils d'encodage du contenu multimédia à diffuser permette de satisfaire des contraintes de qualité. Par exemple, il faut que l'utilisateur du terminal de réception affichant le contenu multimédia puisse, quand les conditions du réseau le permettent, avoir accès à la meilleure qualité, donc à une résolution supérieure à une résolution minimale, ou alors à un débit vidéo supérieur à un débit vidéo minimal. A l'inverse, le groupe de profils mis à disposition doit être aussi adapté à de plus faibles conditions envisageables de diffusion. Pour que l'utilisateur puisse avoir accès au contenu multimédia même s'il ne peut bénéficier d'une qualité optimale, il peut être nécessaire que le groupe de profils comprenne au moins un profil avec une résolution inférieure à une résolution maximale, ou avec un débit vidéo inférieur à un débit vidéo maximal.

Dans un ou plusieurs modes de réalisation, la vérification de la deuxième condition prédéterminée par un groupe de profils implique au moins que le groupe de profils en question permet de minimiser une valeur totale de paramètre des profils dudit groupe de profils.

Selon un aspect de l'invention, la valeur totale de paramètre à minimiser est un débit vidéo.

Comme expliqué précédemment, on peut mettre en œuvre la deuxième condition prédéterminé pour s'assurer qu'un groupe de profils sélectionné met à disposition au moins un profil d'une qualité élevée, utilisé dans le cas où les conditions de diffusion sont optimales, et/ou au moins un profil d'une qualité faible, utilisé dans le cas où les conditions de diffusions sont faibles voire médiocres. Cette deuxième condition prédéterminée peut concerner en outre la totalité des profils du groupe de profils pour satisfaire une exigence de qualité globale.

Dans un ou plusieurs modes de réalisation, une qualité vidéo obtenue après encodage du contenu multimédia en un flux vidéo selon un profil donné et décodage dudit flux vidéo est caractérisée par une distorsion, et la vérification de la deuxième condition prédéterminée par un groupe de profils implique au moins que le groupe de profils en question permet de minimiser une distorsion totale des profils dudit groupe de profils.

La distorsion permet de caractériser la qualité d'un profil d'encodage. Une deuxième condition prédéterminée portant au moins directement sur la distorsion et non sur la résolution ou le débit vidéo, permet de satisfaire des exigences de qualité pour la mise à disposition des profils lors de la diffusion du contenu multimédia.

Dans un ou plusieurs modes de réalisation, la deuxième condition prédéterminée concerne au moins un nombre de profils compris dans l'au moins un groupe de profils à sélectionner.

Comme expliqué précédemment, la variation des conditions de diffusion du contenu multimédia exige en retour une diversité et une hétérogénéité des profils proposés. Ces exigences impliquent nécessairement des contraintes concernant le nombre de profils proposés. Par exemple, l'au moins un groupe de profils sélectionnés doit comporter un nombre minimal de profils. Inversement, un trop grand nombre de profils rend le stockage difficile et n'est pas viable. Il peut en conséquence apparaitre nécessaire de limiter le nombre de profils de l'au moins un groupe de profils sélectionné à un nombre maximal de profils.

Selon un aspect de l'invention, l'étape de formation d'un ou plusieurs groupes de profils est précédée des étapes suivantes :

- analyser une qualité vidéo obtenue après encodage du contenu multimédia en un flux vidéo puis décodage dudit flux vidéo, ces opérations d'encodage et de décodage étant répétées pour différentes valeurs d'au moins un paramètre d'encodage, et
- générer un ensemble de profils en fonction de l'analyse de qualité vidéo, chaque profil étant caractérisé par une valeur de l'au moins un paramètre d'encodage.

Dans ce mode de réalisation, les profils transmis en vue de mettre en œuvre la formation des groupes de profils ont d'abord été sélectionnés en testant la qualité vidéo d'un grand nombre de profils. Cette étape permet une sélection assez fiable des profils « candidats » puisque la qualité vidéo de chaque profil a été mesurée après encodage du contenu multimédia selon le profil en question, puis décodage.

Selon un autre aspect de l'invention, l'étape de sélection d'au moins un groupe de profils est suivie d'une étape d'encodage du contenu multimédia en un ou plusieurs flux vidéo, chaque flux vidéo étant obtenu par encodage dudit contenu multimédia selon un profil de l'au moins un groupe de profils sélectionné.

Il est avantageux de mettre en œuvre une étape d'encodage effectif du contenu multimédia selon les différents profils de l'au moins un groupe de profils sélectionné pour pouvoir par la suite mettre à disposition les flux vidéo obtenus à disposition d'un utilisateur d'un terminal de réception souhaitant accéder au contenu multimédia.

Comme expliqué précédemment, les différents profils et les flux vidéo obtenus par encodage du contenu multimédia selon les différents profils permettent une certaine flexibilité, le terminal de réception pouvant passer d'un flux vidéo à un autre, donc d'un profil à un autre, en fonction des conditions de diffusion. D'autre part, la première condition prédéterminée permet d'ordonner les profils au sein d'un groupe de profils de sorte que, lorsque les conditions de diffusion évoluent, la transition d'un flux vidéo à un autre est réalisée en fonction de l'ordre des profils correspondant. Par exemple, si les conditions de diffusion s'améliorent, le terminal de réception affichant le contenu multimédia M passe d'un profil à un profil précédant (le prédécesseur immédiat typiquement). A l'inverse, si les conditions de diffusion se dégradent, le terminal de réception passe d'un profil à un profil suivant (le successeur immédiat typiquement).

L'invention concerne en outre un programme informatique comprenant des instructions pour la mise en œuvre du procédé décrit précédemment, lorsque ces instructions sont exécutées par au moins un processeur.

L'invention concerne également un système, comprenant un module de sélection d'au moins un groupe de profils d'encodage d'un contenu multimédia, chaque profil étant caractérisé par une valeur d'au moins un paramètre d'encodage, en vue d'encoder numériquement le contenu multimédia en un ou plusieurs flux vidéo pour une diffusion à la demande à au moins un terminal de réception. Par « une valeur d'au moins un paramètre d'encodage », l'homme du métier comprend ici que chaque profil peut être caractérisé par une ou plusieurs valeurs, et que chaque valeur correspond à un paramètre d'encodage distinct des autres paramètres d'encodage. Par exemple, un profil est caractérisé par une première valeur d'un premier paramètre d'encodage et une deuxième valeur d'un deuxième paramètre d'encodage. Le module de sélection est agencé pour former, à partir d'un ensemble donné de profils, un ou plusieurs groupes ordonnés de profils, un même profil pouvant être présent dans plusieurs groupes, de sorte que, dans chaque groupe, chaque profil et son successeur immédiat vérifient une première condition prédéterminée. Le module de sélection est agencé en outre pour sélectionner parmi les groupes formés au moins un groupe de profils vérifiant une deuxième condition prédéterminée.

Dans un ou plusieurs modes de réalisation, le système comprend en outre un module d'analyse agencé pour analyser une qualité vidéo obtenue après encodage du contenu multimédia en un flux vidéo puis décodage dudit flux vidéo, ces opérations d'encodage et de décodage étant répétées pour différentes valeurs d'au moins un paramètre d'encodage. Le module d'analyse est agencé en outre pour générer un ensemble de profils, chaque profil étant caractérisé par une valeur de l'au moins un paramètre d'encodage.

Dans un ou plusieurs modes de réalisation, le système comprend en outre un module d'encodage agencé pour encoder le contenu multimédia en un ou plusieurs flux vidéo, chaque flux vidéo étant obtenu par encodage dudit contenu multimédia selon un profil de l'au moins un groupe de profils sélectionné par le module de sélection.

D'autres caractéristiques, détails et avantages de l'invention apparaîtront à la lecture de la description détaillée ci-après, et à l'analyse des dessins annexés, sur lesquels :

- La **Figure 1** illustre un système selon l'invention, comprenant un module d'analyse, un module de sélection d'au moins un groupe de profils et un module d'encodage ;

- La **Figure 2** illustre une courbe débit-distorsion obtenue par le module d'analyse pour une résolution de 1920*1080 ;
- La **Figure 3** illustre un procédé selon l'invention ;
- La **Figure 4** illustre une étape de formation d'un ou plusieurs groupes de profils du procédé de la **Figure 3** selon un mode de réalisation de l'invention ;
- La **Figure 5** illustre un graphe orienté obtenu lors de l'étape de formation de la **Figure 4** ; et
- Les Figures **6A** et **6B** illustrent une étape de sélection d'au moins un groupe de profils du procédé de la **Figure 3** à l'aide du graphe orienté illustré en **Figure 5.**

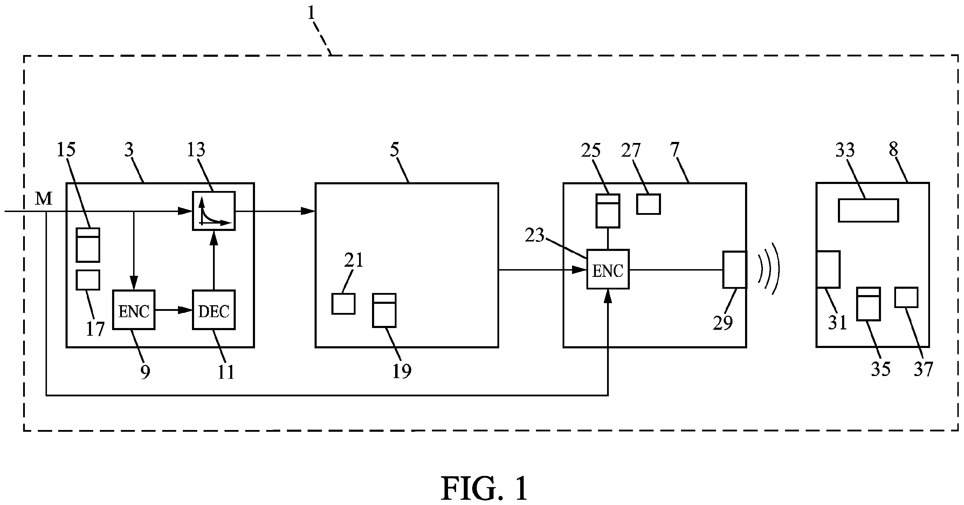

La **Figure 1** illustre un système 1. Le système 1 est adapté pour encoder numériquement un contenu multimédia M en un ou plusieurs flux vidéo en vue d'une diffusion à la demande à au moins un terminal de réception.

Par « encoder numériquement », on entend ici qu'un flux vidéo obtenu est un flux compressé selon un standard donné de compression. Ces standards de compression désignent des normes existantes connues de l'homme du métier. A titre d'exemple uniquement, ces normes sont des normes telles que H.265, aussi appelée MPEG- HEVC (acronyme anglophone pour «*High Efficiency Video Coding*»), H.264 aussi appelée MPEG-4 AVC (acronyme anglophone pour «*Advanced Video Coding*»). Bien entendu, d'autres standards de compression sont possibles. Pour chaque standard de compression, on peut définir plusieurs profils d'encodage, ou profils de compression. Dans la suite de la description on utilisera plus simplement le terme *profil..* Chaque profil est caractérisé par au moins une valeur de paramètre d'encodage. Par exemple, un profil est caractérisé par deux valeurs de paramètre d'encodage : une résolution et un débit vidéo. On comprend donc que dans le contexte de l'invention, un profil désigne un type d'encodage et non le flux vidéo résultant de l'encodage du contenu multimédia selon le profil en question.

On comprend donc que le système 1 est adapté pour encoder numériquement le contenu multimédia M selon différents profils, chaque profil correspondant à un standard de compression caractérisé, par exemple, par une résolution et un débit vidéo. La diversité des profils proposés permet une distribution OTT (Over-The-Top) à différents terminaux de réception, sachant que les conditions de téléchargement et de diffusion du contenu multimédia M sont variable d'un terminal de réception à un autre, d'où la nécessité de proposer plusieurs versions du même contenu multimédia, chaque version correspondant à un flux vidéo compressé selon un profil spécifique.

Le système 1 comprend un module d'analyse 3, un module de sélection 5 et un module d'encodage 7. A titre d'exemple, le système comprend en outre au moins un terminal de réception 8.

Le module d'analyse 3 est agencé pour générer un ensemble de profils d'encodage du contenu multimédia M. Comme expliqué précédemment, un profil est par exemple caractérisé par une résolution et un débit vidéo. Dans un tel mode de réalisation, le module d'analyse 3 est donc agencé pour générer un ensemble de couples résolution-débit vidéo correspondant chacun à un profil d'encodage.

Le module d'analyse 3 comprend un sous-module d'encodage 9, un sous-module de décodage 11, un sous-module d'analyse de qualité vidéo 13, une mémoire 15 et un processeur 17.

Le sous-module d'encodage 9 est agencé pour encoder numériquement le contenu multimédia M en un ou plusieurs flux vidéo, chaque flux vidéo correspondant à un profil dont les valeurs de paramètre d'encodage sont déterminées par le sous-module d'encodage 9.

Le principe du sous-module d'encodage 9 est d'encoder le contenu multimédia M selon un nombre élevé de profils en faisant varier la valeur d'au moins un paramètre d'encodage. Avantageusement, le sous-module d'encodage 9 est agencé pour encoder le contenu multimédia M pour différents couples résolution-débit vidéo, chaque couple permettant d'obtenir un flux vidéo correspondant donc à un flux compressé. A titre d'exemple, le sous-module d'encodage 9 est agencé pour encoder le contenu multimédia M au moins selon les résolutions suivantes : 1920*1080, 1280*720, 1024*576, 832*468, 768*432 et 640*360. Toujours à titre d'exemple, le sous-module d'encodage est agencé pour encoder le contenu multimédia M selon des débits vidéo compris entre 356 kbps (kilobits par seconde) et 2955 kbps. Comme expliqué par la suite, les flux vidéo compressés selon plusieurs profils différents sont destinés à être analysés.

Le sous-module de décodage 11 est agencé pour décoder numériquement le ou les flux vidéo générés par le sous-module d'encodage 9. On comprend que pour chaque flux vidéo généré par le sous-module d'encodage 9 selon un profil donné, le flux vidéo en question est décodé par le sous-module de décodage 11.

Par « décoder numériquement », on entend ici que chaque flux vidéo est, en sortie du sous-module de décodage 11, un flux non-compressé.

Le sous-module d'analyse 13 est agencé pour analyser une qualité vidéo de chaque flux vidéo décodé par le sous-module de décodage 11. Comme illustré en **Figure 1,** le sous-module d'analyse 13 prend également en entrée le contenu multimédia M. Ainsi, le sous-module d'analyse 13 est agencé pour comparer le contenu multimédia M à chacun des flux vidéo obtenus après encodage du contenu multimédia M puis décodage, et ainsi déterminer la qualité vidéo de chaque flux vidéo et donc de chaque profil testé.

Dans la suite de la description, on utilisera la notion de « distorsion » pour caractériser cette qualité vidéo. La distorsion permet de caractériser la qualité de reconstruction d'une image compressée, ici une image du flux vidéo après encodage puis décodage, par rapport à une image originale, ici l'image correspondante du contenu multimédia M. Le sous-module d'analyse 13 est donc agencé pour mesurer la distorsion de chaque flux vidéo, et donc la distorsion associée à chaque profil testé.

La métrique de mesure de la distorsion est par exemple le PSNR (acronyme anglophone pour «*Peak Signal to Noise Ratio* »). Le PSNR peut être défini comme suit :

$$PSNR = 10 \cdot log_{10}(\frac{d^2}{EQM})$$

où :

- *d* est une dynamique du flux vidéo après encodage puis décodage, c'est-à-dire la valeur maximum possible pour un pixel d'une image du flux vidéo en question, et
- *EQM* est l'erreur quadratique moyenne définie comme suit pour une image originale $I_o$ du contenu multimédia M et une image compressée $I_c$ du flux vidéo, chaque image étant une matrice de m*n pixels :

$$EQM = \frac{1}{mn} \sum_{i=0}^{m-1} \sum_{j=0}^{n-1} (I_o(i,j) - I_c(i,j))^2$$

où :

- $I_o(i,j)$ est la valeur du pixel de la i-ème ligne et de la j-ème colonne de l'image originale $I_o$, et
- $I_c(i,j)$ est la valeur du pixel de la i-ème ligne et de la j-ème colonne de l'image compressée $I_c$.

Par ailleurs, il est bien connu de l'homme du métier que, pour le calcul du PSNR, il est classique d'ajouter une valeur réelle strictement positive ε à l'erreur quadratique moyenne. L'ajout d'une telle valeur permet par exemple de pouvoir calculer une valeur de PSNR même lorsque l'erreur quadratique moyenne est nulle.

Le PSNR peut s'exprimer sans unité ou en décibels (dB).

Comme expliqué précédemment, chaque flux vidéo est compressé selon un profil caractérisé par une valeur d'au moins un paramètre d'encodage, par exemple une résolution et un débit vidéo, puis décompressé. On comprend donc que, pour chaque couple résolution-débit vidéo, le sous-module d'analyse 13 est agencé pour déterminer une distorsion sur la base d'une comparaison entre le flux vidéo encodé par le sous-module d'encodage 9 selon le profil correspondant au couple résolution-débit vidéo en question puis décodé par le sous-module de décodage 11, et le contenu multimédia M.

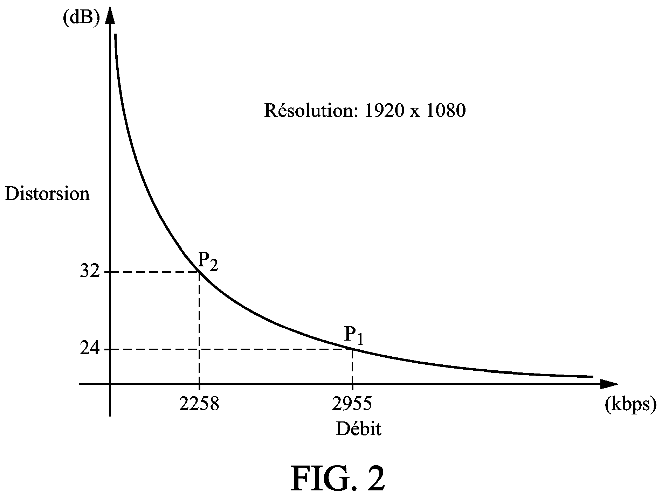

La **Figure 2** illustre, à titre d'exemple, une courbe débit-distorsion obtenue pour une résolution de 1920*1080. Autrement dit, chaque point de la courbe permet de déterminer la distorsion obtenue pour un débit vidéo donné et une résolution de 1920*1080. On comprend qu'avantageusement, le sous-module d'analyse 13 est agencé pour tracer une telle courbe pour chaque résolution possible.

D'autre part, le sous-module d'analyse 13 est agencé en outre pour générer un ensemble de profils, chaque profil étant caractérisé par une valeur de l'au moins un paramètre d'encodage, sur la base de l'analyse réalisée. Par exemple ici, le sous-module d'analyse 13 est agencé pour générer un ensemble de profils, chaque profil étant caractérisé par un couple résolution-débit vidéo pour lequel la mesure de la distorsion par le sous-module d'analyse 13 est considérée comme satisfaisante.

La mémoire 15 est configurée pour stocker des instructions sous la forme d'un programme informatique dont l'exécution par le processeur 17 se traduit par le fonctionnement du module d'analyse 3. Avantageusement, la mémoire 15 est configurée en outre pour stocker l'ensemble de profils généré par le sous-module d'analyse 13.

Le module de sélection 5 est agencé pour former, à partir d'un ensemble donné de profils, un ou plusieurs groupes ordonnés de profils, un même profil pouvant être présent dans plusieurs groupes, de sorte que, dans chaque groupe, chaque profil et son successeur immédiat vérifient une première condition prédéterminée. Par exemple, l'ensemble donné de profils est l'ensemble généré par le module d'analyse 3.

Dans un ou plusieurs modes de réalisation, la première condition prédéterminée est relative à une continuité entre chaque profil et son successeur immédiat. Comme expliqué par la suite, cette continuité entre les profils permet, lors de la diffusion du contenu multimédia M, de passer d'un flux vidéo à un autre, chaque flux vidéo correspondant à l'encodage du contenu multimédia M selon un profil, en fonction de l'évolution des conditions de diffusion. Par ailleurs, cette continuité concerne des valeurs de paramètre d'encodage respectives du profil et du successeur immédiat. En d'autres termes, cette continuité entre un profil et son successeur immédiat (ou son prédécesseur immédiat d'ailleurs) est relative à la ou aux valeurs de paramètres d'encodage caractérisant ces profils.

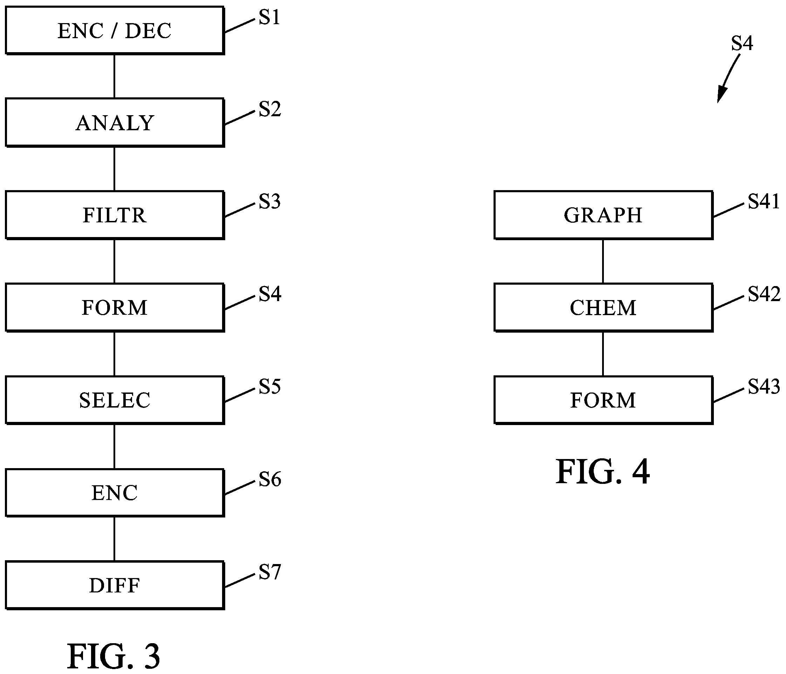

Le module de sélection 5 est agencé en outre pour sélectionner parmi les groupes formés au moins un groupe de profils vérifiant une deuxième condition prédéterminée. La formation des groupes ordonnés de profils ainsi que la sélection d'au moins un groupe de profils parmi les groupes formés seront décrites plus en détail ci-après en référence aux **Figures 3, 4, 5, 6A** et **6B.**

Avantageusement, le module de sélection 5 est agencé en outre pour filtrer l'ensemble de profils avant la formation des groupes ordonnés de profils. Là encore, le filtrage de l'ensemble de profils sera décrit de manière plus détaillée dans la suite de la description.

Le module de sélection 5 comprend une mémoire 19 et un processeur 21.

La mémoire 19 est configurée pour stocker des instructions sous la forme d'un programme informatique dont l'exécution par le processeur 21 se traduit par le fonctionnement du module de sélection 5.

La mémoire 19 peut en outre être configurée pour stocker l'ensemble de profils reçu par le module de sélection 5. Par ailleurs, la mémoire 19 peut aussi stocker le ou les groupes de profils sélectionnés par le module de sélection 5.

Le module d'encodage 7 est agencé pour encoder le contenu multimédia M en un ou plusieurs flux vidéo, chaque flux vidéo étant obtenu par encodage du contenu multimédia M selon un profil du ou des groupes de profils sélectionnés par le module de sélection 5.

Le module d'encodage 7 comprend un sous-module d'encodage 23, une mémoire 25 et un processeur 27. Avantageusement, le module d'encodage 7 comprend en outre un sous-module de communication 29.

Le sous-module d'encodage 23 est agencé pour encoder le contenu multimédia M en un ou plusieurs flux vidéo. Comme illustré en **Figure 1,** le sous-module d'encodage 23 a pour entrées à la fois le ou les groupes de profils sélectionnés par le module de sélection 5 et le contenu multimédia M. On comprend que le sous-module d'encodage 23 est agencé pour générer autant de flux vidéo qu'il y a de profils dans le ou les groupe de profils sélectionnés. Chaque flux vidéo généré par le sous-module d'encodage 23 est un flux compressé selon un profil caractérisé par au moins une valeur d'un paramètre d'encodage, par exemple une résolution et un débit vidéo. Le sous-module d'encodage 23 peut être similaire au sous-module d'encodage 9 du module d'analyse 3 décrit plus haut.

La mémoire 25 est configurée pour stocker des instructions sous la forme d'un programme informatique dont l'exécution par le processeur 27 se traduit par le fonctionnement du module d'encodage 7. Avantageusement, la mémoire 25 est configurée en outre pour stocker le ou les flux vidéo générés par le sous-module d'encodage 23.

Comme illustré en **Figure 1,** le module d'encodage 7 comprend en outre un sous-module de communication 29. Le sous-module de communication 29 est agencé, par exemple, pour émettre un flux vidéo généré par le sous-module d'encodage 23 à destination d'un terminal de réception, par exemple le terminal de réception 8 décrit ci-après, en vue d'afficher le flux vidéo en question.

Le terminal de réception 8 est agencé pour afficher le contenu multimédia M. Plus exactement, le terminal de réception 8 est agencé pour afficher le contenu multimédia encodé selon le ou les flux vidéo reçus lors de la diffusion, de sorte qu'une évolution de conditions de diffusion du contenu multimédia M implique une transition d'un flux vidéo à un autre en fonction de l'ordre des profils au sein du groupe de profils sélectionné. Le terminal de réception 8 est agencé pour appliquer un traitement numérique aux flux vidéo reçus afin d'afficher le contenu multimédia M.

Le terminal de réception 8 comprend un module de communication 31, un écran 33, une mémoire 35 et un processeur 37.

Le module de communication 31 est agencé pour recevoir le ou les flux vidéo obtenus par encodage du contenu multimédia M, en provenance du module d'encodage 7, et plus particulièrement du sous-module de communication 29.

L'écran 33 est agencé pour afficher le contenu multimédia M.

La mémoire 35 est configurée pour stocker des instructions sous la forme d'un programme informatique dont l'exécution par le processeur 37 se traduit par le fonctionnement du terminal de réception 8. En d'autres termes, le processeur 37 pilote la transition d'un flux vidéo à un autre, donc d'un profil à un autre, lorsque l'évolution des conditions de diffusion rend cette transition nécessaire.

On comprend donc que l'état du réseau a un impact sur la diffusion des flux vidéo générés par le module d'encodage 7 à destination du terminal de réception 8, de sorte que celui-ci, en fonction des conditions de diffusion, peut être amené à afficher le contenu multimédia M selon un niveau de qualité plutôt qu'un autre.

Comme expliqué précédemment, le contexte de l'invention concerne les services dits OTT ou services par contournement. De tels services OTT sont fournis par l'intermédiaire de réseaux dits non managés, c'est-à-dire des réseaux dont la qualité de service (QoS) ou la bande passante varie pour chaque client et varie dans le temps. Chaque client disposant de sa propre connexion pour télécharger les contenus multimédias, les conditions de téléchargements varient d'un client à un autre ce qui nécessite donc la conservation et la gestion de plusieurs versions du contenu multimédia M, ces versions correspondant aux différents profils. D'ailleurs, les conditions de téléchargement et de diffusion peuvent varier au cours du temps pour un même client. La diffusion à la demande du contenu multimédia M offrant plusieurs flux vidéo d'un même contenu multimédia M se concrétise finalement par la possibilité pour le terminal de réception 8 de passer d'un profil à un autre, selon les conditions de diffusion des flux vidéo associés à ces profils.

L'affichage du contenu multimédia M par le terminal de réception 8 est conditionné par les conditions de diffusion des flux vidéo.

Le passage d'un flux vidéo à un autre correspond au passage d'un profil à un autre. Cette transition d'un flux vidéo à un autre est facilitée par le fait que le ou les groupes de profils formés puis sélectionnés sont ordonnés grâce à la première condition prédéterminée qui, dans un ou plusieurs modes de réalisation, est relative à une continuité entre les profils. L'homme du métier comprend ainsi que cette continuité conditionnant l'ordre des profils au sein d'un groupe de profils est liée à la diffusion ultérieure du contenu multimédia, les profils étant ordonnés selon leurs valeurs respectives de paramètres d'encodage.

Un procédé selon l'invention va maintenant être décrit en référence à la **Figure 3.**

Lors d'une première étape S1, le contenu multimédia M est transmis au module d'analyse 3. Le sous-module d'encodage 9 encode numériquement le contenu multimédia M en un ou plusieurs flux vidéo. Chaque flux vidéo généré est un flux compressé selon un profil caractérisé par au moins une valeur d'un paramètre d'encodage. Comme expliqué précédemment, chaque profil est caractérisé par exemple par une résolution et un débit vidéo.

Les flux vidéo sont ensuite transmis au sous-module de décodage 11. Le sous-module de décodage 11 décode numériquement chacun des flux vidéo reçus. Ces flux vidéo sont ainsi, en sortie du sous-module de décodage 11, décompressés.

Lors d'une deuxième étape S2, la qualité vidéo de chaque flux vidéo décompressé en sortie du sous-module de décodage 11 est estimée et analysée par comparaison avec le contenu multimédia M. Avantageusement, une courbe débit-distorsion est générée pour chaque résolution. A titre d'exemple, la **Figure 2** illustre une courbe débit-distorsion obtenue pour une résolution de 1920*1080, chaque point de la courbe permet de déterminer la distorsion obtenue pour un débit vidéo donné, et renseigné en abscisse, et une résolution de 1920*1080.

Sur la base de l'analyse réalisée sur chaque flux vidéo décompressé et des différentes courbes débit-distorsion tracées pour chacune des résolutions, le sous-module d'analyse 13 génère ensuite un ensemble de profils.

Par exemple, à partir de la courbe débit-distorsion tracée pour une résolution de 1920*1080 et illustrée en **Figure 2,** deux profils $P_1$ et $P_2$ sont sélectionnés par le sous-module d'analyse 13 pour être inclus dans l'ensemble de profils. Le profil $P_1$ est caractérisé par une résolution de 1920*1080 et un débit vidéo de 2955 kpbs. Le profil $P_2$ est caractérisé par une résolution de 1920*1080 et un débit de 2258 kbps.

Le tableau 1 ci-dessous présente, à titre d'exemple, un ensemble de profils généré par le sous-module d'analyse 13. Cet ensemble de profil comprend notamment le profil $P_1$ et le deuxième profil $P_2$ retenus sur la base de l'analyse réalisée par le sous-module d'analyse 13 pour une résolution de 1920*1080 :

TABLEAU 1

| Profils | Résolution | Débit (kbps) | Distorsion (dB) |
|---------|------------|--------------|-----------------|
| $P_1$ | 1920*1080 | 2955 | 24 |
| $P_9$ | 768*432 | 491 | 79 |
| $P_3$ | 1280*720 | 1512 | 45 |
| $P_{11}$ | 640*360 | 356 | 88 |
| $P_5$ | 1024*576 | 1063 | 57 |
| $P_6$ | 1024*576 | 778 | 65 |
| $P_{10}$ | 640*360 | 488 | 80 |
| $P_2$ | 1920*1080 | 2258 | 32 |
| $P_4$ | 1280*720 | 1123 | 53 |
| $P_8$ | 768*432 | 670 | 71 |
| $P_7$ | 832*468 | 552 | 75 |

Dans le tableau 1, on constate que des profils compris dans l'ensemble de profils sont de résolutions diverses. En effet, même si le souhait du fournisseur de services OTT est de délivrer la plus haute résolution possible, les conditions de téléchargement et de diffusion du contenu multimédia M ne permettent pas toujours de supporter une résolution élevée. Par ailleurs, il est parfois préférable de diminuer la résolution plutôt que le débit vidéo. En effet, lorsqu'on baisse le débit, le contenu multimédia M doit être compressé davantage ce qui peut entrainer l'apparition d'artefacts de compression, d'où la nécessité de proposer des résolutions inférieures plutôt que de diminuer le débit vidéo tout en restant à la résolution maximale.

L'ensemble de profils généré par le sous-module d'analyse 13 est ensuite transmis au module de sélection 5.

Lors d'une troisième étape S3, le module de sélection 5 filtre un ensemble de profils reçus. Par exemple, l'ensemble de profils filtré par le module de sélection 5 est l'ensemble de profils généré par le sous-module d'analyse 13 lors de l'étape S2 et illustré dans le tableau 1 ci-avant. Lors de cette étape, le module de sélection 5 classe les profils de l'ensemble de profils par ordre décroissant de résolution de sorte que, si un ou plusieurs profils ont une même résolution, ces profils sont ordonnés entre eux par ordre décroissant de débit et/ou par ordre croissant de distorsion. L'ensemble de profil, après classement, est illustré dans le tableau 2 ci-après :

TABLEAU 2

| Profils | Résolution | Débit (kbps) | Distorsion (dB) |
|---------|------------|--------------|-----------------|
| $P_1$ | 1920*1080 | 2955 | 24 |
| $P_2$ | 1920*1080 | 2258 | 32 |
| $P_3$ | 1280*720 | 1512 | 45 |
| $P_4$ | 1280*720 | 1123 | 53 |
| $P_5$ | 1024*576 | 1063 | 57 |
| $P_6$ | 1024*576 | 778 | 65 |
| $P_7$ | 832*468 | 552 | 75 |
| $P_8$ | 768*432 | 670 | 71 |
| $P_9$ | 768*432 | 491 | 79 |
| $P_{10}$ | 640*360 | 488 | 80 |
| $P_{11}$ | 640*360 | 356 | 88 |

Ensuite, si, après classement, un premier profil est classé avant un deuxième profil de sorte que le deuxième profil a un débit vidéo supérieur au premier profil ou une distorsion inférieure au premier profil, le module de sélection 5 supprime le deuxième profil en question de l'ensemble de profils. Un tel filtrage permet d'éviter toute anomalie. En effet, et comme illustré en **Figure 2,** la distorsion est inversement proportionnelle au débit vidéo.

Dans le tableau 2, le profil Pg a un débit vidéo de 670 kbps qui est donc supérieur au débit vidéo du profil $P_7$ qui est de 552 kbps. Néanmoins, on constate que la distorsion du profil Pg est de 71 dB et est donc inférieure à la distorsion du profil $P_7$ qui est de 75 dB. Pour corriger, cette anomalie, le module de sélection 5 supprimer un des deux profils $P_7$ et Pg.

Par exemple, le module de sélection 5 supprime le profil présentant la résolution la plus faible, donc ici le profil Pg.

L'ensemble de profils après filtrage, à l'issue de cette troisième étape S3, est illustré dans le tableau 3 ci-après :

TABLEAU 3

| Profils | Résolution | Débit (kbps) | Distorsion (dB) |
|---------|------------|--------------|-----------------|
| $P_1$ | 1920*1080 | 2955 | 24 |
| $P_2$ | 1920*1080 | 2258 | 32 |
| $P_3$ | 1280*720 | 1512 | 45 |
| $P_4$ | 1280*720 | 1123 | 53 |
| $P_5$ | 1024*576 | 1063 | 57 |
| $P_6$ | 1024*576 | 778 | 65 |
| $P_7$ | 832*468 | 552 | 75 |
| $P_9$ | 768*432 | 491 | 79 |
| $P_{10}$ | 640*360 | 488 | 80 |
| $P_{11}$ | 640*360 | 356 | 88 |

Lors d'une quatrième étape S4, le module de sélection forme, à partir de l'ensemble de profils, par exemple l'ensemble de profils après filtrage, un ou plusieurs groupes ordonnés de profils, un même profil pouvant être présent dans plusieurs groupes, de sorte que, dans chaque groupe, chaque profil et son successeur immédiat vérifient une première condition prédéterminée.

Par exemple, la première condition prédéterminée est relative à une continuité entre chaque profil et son successeur immédiat, la continuité concernant des valeurs de paramètre d'encodage respectives du profil et du successeur immédiat.

Comme expliqué précédemment, chaque profil est caractérisé par exemple par deux valeurs de paramètre d'encodage, à savoir une résolution et un débit vidéo, une distorsion étant associée au couple résolution-débit vidéo.

Dans un ou plusieurs modes de réalisation, la vérification de la première condition prédéterminée par un profil et son successeur immédiat dans un groupe de profils implique au moins que la résolution du successeur est inférieure ou égale à la résolution du profil, que le débit vidéo du successeur est inférieur ou égal au débit vidéo du profil, et que la distorsion du successeur est supérieure ou égale à la distorsion du profil.

Par exemple, les groupes de profils suivants peuvent être formés :

TABLEAU 4

| Groupes de profils | Profils ordonnés |
|---|---|
| $G_1$ | $P_1$, $P_3$, $P_6$, $P_{11}$ |
| $G_2$ | $P_5$, $P_{10}$ |
| $G_3$ | $P_6$, $P_7$, $P_{10}$ |

Bien évidemment, d'autres groupes de profils vérifiant une telle première condition prédéterminée peuvent être formés lors de cette étape.

Dans le groupe $G_2$ par exemple, le profil $P_5$ a pour successeur immédiat le profil $P_{10}$. En effet, le profil $P_{10}$ a une résolution de 640*360, donc inférieure à la résolution de 1024*576 du profil $P_5$, le profil $P_{10}$ a un débit vidéo de 488 kbps, donc inférieur au débit vidéo de 1063 kbps du profil $P_5$, et le profil $P_{10}$ a une distorsion de 80 dB, donc supérieure à la distorsion de 57 dB du profil $P_5$.

Par ailleurs, on constate que le profil $P_6$ est présent à la fois dans le groupe $G_1$ et dans le groupe $G_3$. De même, le profil $P_{10}$ est présent à la fois dans le groupe $G_2$ et dans le groupe $G_3$.

Dans un ou plusieurs modes de réalisation, l'étape de formation du ou des groupes de profils est mise en œuvre par le module de sélection 5 de sorte que, dans chaque groupe de profils formé, chaque profil a nécessairement un prédécesseur et un successeur sauf en cas d'impossibilité liée à la première condition prédéterminée. Avec une telle contrainte, le groupe $G_2$ ne peut être formé. En effet, le profil $P_5$ n'a pas de prédécesseur alors que les profils $P_1$, $P_2$, $P_3$ et $P_4$ pourraient tout à fait avoir pour successeur immédiat le profil $P_5$ étant donné que $P_1$, $P_2$, $P_3$ ou $P_4$ vérifient chacun avec $P_5$ pour successeur immédiat la première condition prédéterminée telle que définie dans l'exemple précédent. D'ailleurs, le profil $P_{10}$ n'a pas de successeur immédiat dans le groupe $G_2$ alors que le profil $P_{11}$ pourrait tout à fait être le successeur immédiat de $P_{10}$ étant donné que $P_{10}$ vérifie avec $P_{11}$ pour successeur immédiat la première condition prédéterminée. A l'inverse, le groupe $G_1$ respecte cette contrainte. En effet, certes $P_1$ n'a pas de prédécesseur, mais aucun autre profil ne pourrait avoir $P_1$ comme successeur immédiat tout en vérifiant la première condition prédéterminée. De même, $P_{11}$ n'a pas de successeur immédiat puisqu'il est impossible de trouver un autre profil tel quel $P_{11}$ et cet autre profil en successeur immédiat de $P_{11}$ vérifient la première condition prédéterminée.

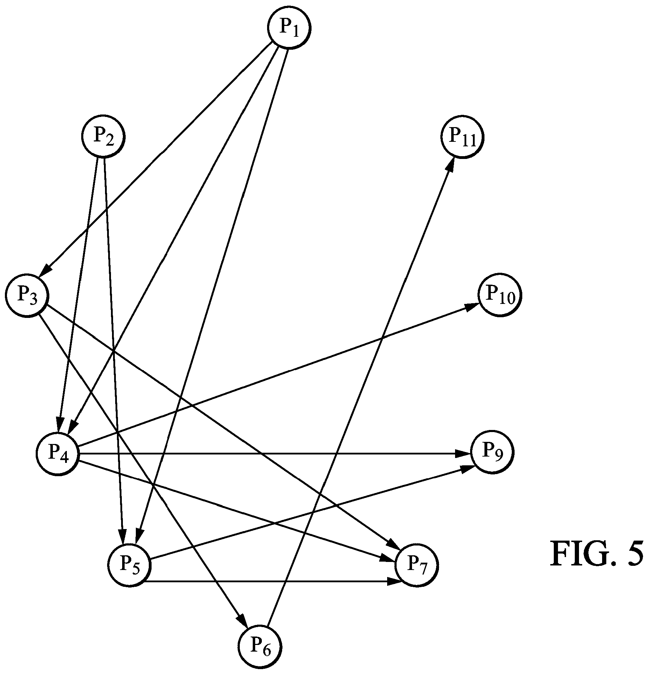

Un mode de réalisation de l'étape S4 sera décrit plus tard dans la description en référence aux **Figures** 4 et 5.

Lors d'une cinquième étape S5, le module de sélection 5 sélectionne parmi les groupes formés au moins un groupe de profils vérifiant une deuxième condition prédéterminée.

Par exemple, la vérification de la deuxième condition prédéterminée par un groupe de profils implique au moins que le groupe de profils en question comprend au moins un profil caractérisé par une valeur de paramètre vérifiant une contrainte de seuil de ce paramètre.

Dans un tel cas, de nombreux modes de réalisation sont possibles et peuvent bien évidemment être combinés entre eux du fait de leur compatibilité. Par exemple :

- l'au moins un profil est caractérisé par une résolution, et la vérification de la contrainte de seuil par l'au moins un profil implique que la résolution de l'au moins un profil est supérieure ou égale à une résolution minimale prédéterminée, et/ou
- l'au moins un profil est caractérisé par une résolution, et la vérification de la contrainte de seuil par l'au moins un profil implique que la résolution de l'au moins un profil est inférieure ou égale à une résolution maximale prédéterminée, et/ou

- l'au moins un profil est caractérisé par un débit vidéo, et la vérification de la contrainte de seuil par l'au moins un profil implique que le débit vidéo de l'au moins un profil est supérieur ou égal à un débit minimal prédéterminé, et/ou

- l'au moins un profil est caractérisé par un débit vidéo, et la vérification de la contrainte de seuil par l'au moins un profil implique que le débit vidéo de l'au moins un profil est inférieur ou égal à un débit maximal prédéterminé.

Dans le cas où chaque profil est caractérisé au moins par une résolution, la vérification de la deuxième condition prédéterminée par un groupe de profils implique par exemple que le groupe de profils en question comprend au moins un profil caractérisé par une résolution supérieure ou égale à une résolution minimale prédéterminée. Par exemple, la résolution minimale prédéterminée est la résolution 1920*1080. Dans un tel mode de réalisation, et en référence au tableau 4 illustrant des groupes formés par le module de sélection 5, seul le groupe $G_1$ est sélectionné puisqu'il comprend le profil $P_1$ caractérisé par une résolution de 1920*1080. Le fait de sélectionner un groupe comprenant un profil caractérisé par une résolution supérieure ou égale à une résolution minimale prédéterminée permet d'assurer, lors de la diffusion à la demande, qu'un client puisse demander et accéder à la diffusion du contenu multimédia M à la plus haute résolution, si les contraintes matérielles et les conditions de diffusion le permettent bien sûr.

Alternativement ou parallèlement, la deuxième condition prédéterminée concerne un nombre de profils compris dans le ou les groupes de profils à sélectionner.

Cette deuxième condition prédéterminée sur le nombre de profils porte, par exemple, sur un nombre maximal de profil et/ou un nombre minimal de profils. Par exemple, le ou les groupes de profils sélectionnés par le module de sélection 5 doivent comprendre au moins trois profils. Dans un tel mode de réalisation, seuls les groupes $G_1$ et $G_3$ sont sélectionnés puisqu'ils comprennent respectivement quatre et trois profils. Un nombre minimal de profils dans le ou les groupes de profils sélectionnés permet d'assurer une diversité des profils lors de la diffusion à la demande. En effet, les conditions de lecture ou de téléchargement du contenu multimédia M sont variables et il est donc avantageux que cette hétérogénéité des conditions de diffusion soit en regard d'une diversité des profils et donc des flux vidéo compressés proposés pour le même contenu multimédia M.

Bien entendu, on comprend que la deuxième condition prédéterminée peut être une combinaison des modes de réalisation précédents. Dans un tel cas, seul le groupe $G_1$ est sélectionné par le module de sélection 5.

Lors d'une sixième étape S6, le ou les groupes de profil sélectionnés sont transmis au module d'encodage 7. Le sous-module d'encodage 23 du module d'encodage 7 reçoit en entrées à la fois l'au moins un groupe de profils sélectionné par le module de sélection 5 et le contenu multimédia M, comme illustré en **Figure 1.**

Toujours lors de cette étape, le sous-module d'encodage 7 encode le contenu multimédia M en un ou plusieurs flux vidéo, chaque flux vidéo étant obtenu par encodage du contenu multimédia M selon un profil de l'au moins un groupe de profils sélectionné par le module de sélection 5. Le ou les flux vidéo générés permettent une diffusion à la demande, dans le cadre d'un service OTT notamment, chaque flux vidéo présentant une qualité vidéo différente. Avantageusement, le ou les flux vidéo sont transmis à destination d'au moins un terminal de réception, ici le terminal de réception 8, par le sous-module de communication 29.

Enfin, lors d'une septième étape S7, le terminal de réception 8 reçoit le ou les flux vidéo émis en provenance du module d'encodage 7. Le terminal de réception 8 accède alors à plusieurs versions d'un même contenu, en l'occurrence ici le contenu multimédia M, et est donc prêt à afficher ce contenu multimédia M. Le terminal de réception 8 applique un traitement numérique à un flux vidéo pour afficher le contenu multimédia M, par exemple via l'écran 33. Lorsque les conditions de diffusion évoluent, le terminal de réception 8 s'adapte en conséquence et change de version du contenu multimédia M. Ainsi, au cours du visionnage du contenu multimédia M, les conditions de diffusion du contenu multimédia M, c'est-à-dire la diffusion des flux vidéos générés et représentant plusieurs version du contenu multimédia M, peuvent varier en fonction du réseau ou d'autres facteurs comme le terminal de réception 8 lui-même, d'éventuelles intempéries ou plus généralement le trafic sur le réseau via lequel les flux vidéo circulent. Par conséquent, et comme expliqué précédemment, le terminal de réception 8, ou un lecteur vidéo de ce terminal, peut passer d'un flux vidéo à un autre, donc d'un profil à un autre, pour s'adapter aux changements des conditions de diffusion. L'homme du métier comprend aisément que l'au moins un groupe de profils sélectionné est ordonné de sorte que, lorsque le terminal de réception transite d'un profil à un autre profil, cet autre profil est avantageusement le prédécesseur immédiat ou le successeur immédiat. En particulier, lorsque les conditions de diffusion s'améliorent, il sera naturel pour le terminal de réception de passer à un profil de meilleure qualité. A l'inverse, lorsque les conditions de diffusion se dégradent, il sera naturel pour le terminal de réception de passer à un profil de qualité moindre. Bien entendu, d'autres causes peuvent entrainer le passage d'un flux vidéo à un autre. Par exemple, l'utilisateur du terminal de réception 8 peut parfois changer la qualité ce qui induit un changement de flux vidéo et donc de profil.

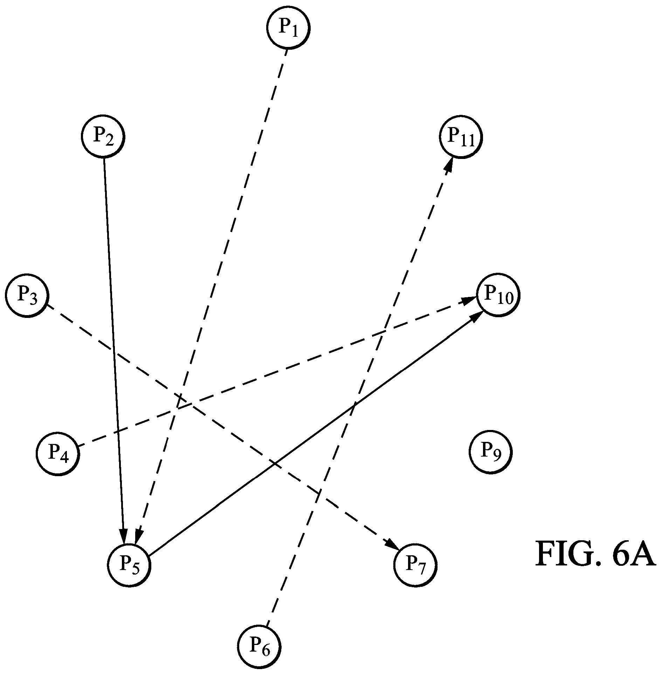

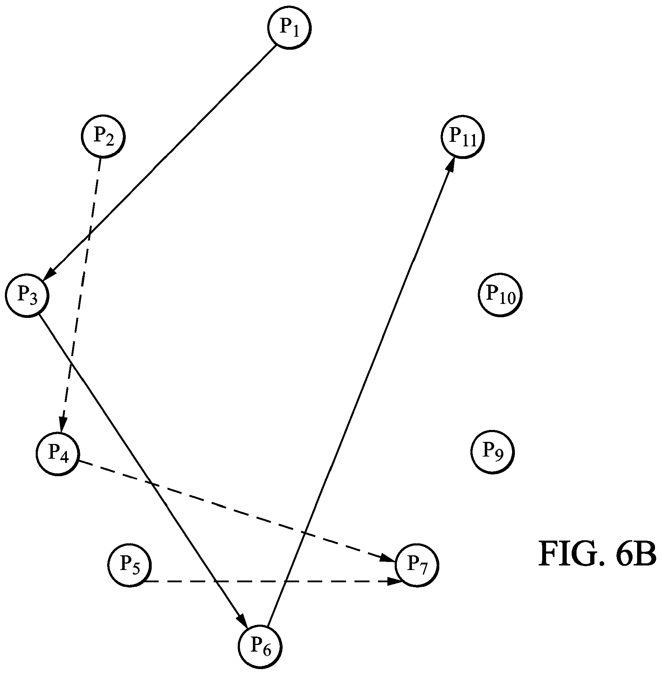

Un mode de réalisation de l'étape S4 de formation d'un ou plusieurs groupes de profils va maintenant être décrit en référence aux **Figures 4** et **5.** On parlera dans ce mode de réalisation d'étapes, même si les étapes en questions peuvent être considérées comme des sous-étapes de l'étape S4. D'autre part, l'étape S5 sera également décrite dans le contexte de ce mode de réalisation spécifique en référence aux **Figures 6A** et **6B.**

Lors d'une étape S41, le module de sélection 5 construit un graphe orienté comprenant un ensemble de nœuds et un ensemble d'arcs. Le graphe orienté est construit de sorte que chaque nœud correspond à un profil de l'ensemble de profils reçu en provenance du module d'analyse 3, et de sorte qu'un premier nœud est relié à un second nœud par un arc, l'arc en question ayant le premier nœud pour origine et le second nœud pour extrémité, si et seulement si les profils respectivement associés aux premier et second nœuds vérifient la première condition prédéterminée. On comprend que, lorsqu'un un arc du graphe orienté a pour origine un premier nœud et pour extrémité un second nœud, cela signifie que le profil associé au premier nœud peut avoir le profil associé au second nœud pour successeur dans un groupe ordonné.

Il à noter qu'une telle représentation à l'aide d'un graphe orienté permet d'obtenir de manière exhaustive les groupes possibles pouvant être formés par le module de sélection 5.

Selon un ou plusieurs modes de réalisation, une qualité vidéo obtenue après encodage du contenu multimédia en un flux vidéo selon un profil donné et décodage dudit flux vidéo est caractérisée par une distorsion, et la vérification de la première condition prédéterminée par un profil et son successeur immédiat dans un groupe de profils implique au moins que le ratio de la distorsion du profil et de la distorsion du successeur est supérieur ou égal à un seuil minimal de ratio de distorsion et est inférieur ou égal à un seuil maximal de ratio de distorsion.

Bien entendu, pour assurer une transition douce au niveau de la qualité vidéo entre deux profils consécutifs d'un même groupe de profils, l'homme du métier comprend aisément qu'il est possible en outre dans un ou plusieurs de modes de réalisation de fixer, dans le cadre de la première condition prédéterminée, une contrainte sur la différence de distorsion entre un profil et son successeur immédiat. A titre d'exemple, la vérification de la première condition prédéterminée par un profil et son successeur immédiat dans un groupe de profils implique au moins que différence de la distorsion du successeur et de la distorsion du profil est supérieure ou égal à un seuil minimal de différence de distorsion et est inférieure ou égal à un seuil maximal de différence de distorsion.

Typiquement, dans un tel cas, le seuil maximal de différence de PSNR est de 2 dB.

Selon un ou plusieurs modes de réalisation, chaque profil est caractérisé au moins par un débit vidéo, et la vérification de la première condition prédéterminée par un profil et son successeur immédiat dans un groupe de profils implique au moins que le ratio du débit vidéo du profil et du débit vidéo du successeur est supérieur ou égal à un seuil minimal de ratio de débit vidéo et est inférieur ou égal à un seuil maximal de ratio de débit vidéo.

Un exemple d'un tel graphe orienté est illustré en **Figure 5.** Dans cet exemple, on a représenté sous forme de graphe orienté l'ensemble de profils illustré dans le tableau 3, de sorte qu'un premier nœud est relié à un second nœud par un arc, l'arc en question ayant le premier nœud pour origine et le second nœud pour extrémité, si et seulement si le ratio du débit vidéo du profil correspondant au premier nœud et du débit vidéo du profil correspondant au second nœud est supérieur ou égal à 1,6, qui est donc le seuil minimal de ratio de débit vidéo, et est inférieur ou égal à 2,9, qui est donc le seuil maximal de ratio de débit vidéo. Par exemple, un arc relie le nœud correspondant au profil $P_3$ au nœud correspondant au profil $P_7$. En effet, le débit vidéo du profil $P_3$ est de 1512 kbps tandis que le débit vidéo du profil $P_7$ est de 552 kbps, soit un ratio environ égal à 2,74. A l'inverse, aucun arc ne relie le nœud correspondant au profil $P_2$, d'un débit vidéo de 2258 kbps, au nœud correspondant au profil $P_{10}$, d'un débit vidéo de 488 kbps, le ratio étant environ égal à 4,63.

Dans un ou plusieurs modes de réalisation, le seuil minimal de ratio de débit vidéo est typiquement de l'ordre de 1,5 et le seuil maximal de ratio de débit vidéo est de l'ordre de 2.

Lors d'une étape S42, le module de sélection 5 sélectionne un ou plusieurs chemins du graphe orienté construit de sorte que chaque chemin comprend un nœud de demi-degré extérieur nul. En d'autres termes, le ou les chemins choisis sont tels qu'ils comprennent un nœud sans successeur, c'est-à-dire un nœud n'étant l'origine d'aucun arc. Par exemple, en référence toujours au graphe orienté illustré en **Figure 5,** le chemin $P_1$-$P_3$-$P_6$ ne peut être sélectionné. En effet, aucun des nœuds de ce chemin n'est de demi-degré extérieur nul :

$$d^+(P_1) = 3 \qquad d^+(P_3) = 2 \qquad d^+(P_6) = 1$$

où : $d^+(P_i)$ est le demi-degré extérieur du nœud correspondant au profil $P_i$.

En revanche, le chemin $P_2$-$P_4$-$P_9$ est sélectionné par le module de sélection 5. En effet, le nœud correspondant au profil $P_9$ est de demi-degré extérieur nul :

$$d^+(P_2) = 2 \qquad d^+(P_4) = 3 \qquad d^+(P_9) = 0$$

Enfin, lors d'une étape S43, le module de sélection 5 forme un ou plusieurs groupes ordonnés de profils, chaque groupe correspondant à un chemin sélectionné, de sorte qu'un profil et son successeur correspondent respectivement à un premier nœud et à un deuxième nœud reliés par un arc.

Par ailleurs, la cinquième étape S5 de sélection d'au moins un groupe de profils par le module de sélection 5 peut également être mise en œuvre à l'aide du graphe orienté construit dans le mode de réalisation décrit en référence aux **Figures 4** et **5.**

Dans un ou plusieurs modes de réalisation, la vérification de la deuxième condition prédéterminée par un groupe de profils implique au moins que le groupe de profils en question permet de minimiser une valeur totale de paramètre des profils de ce groupe de profils. Par exemple, chaque profil est caractérisé au moins par un débit vidéo, et la vérification de la deuxième condition prédéterminée par un groupe de profils implique au moins que le groupe de profils en question permet de minimiser un débit vidéo total des profils du groupe de profils. Un exemple de mise en œuvre de l'étape S5 selon cette deuxième condition prédéterminée est illustré sur la **Figure 6A.**

Sur ce graphe orienté, pour tout nœud de demi-degré extérieur strictement supérieur à 1, c'est-à-dire chaque nœud étant l'origine d'au moins deux arcs, seul l'arc menant au profil de débit vidéo minimal a été conservé. Par exemple, en référence à la **Figure 5,** le nœud correspondant au profil $P_1$ est l'origine de trois arcs menant aux nœuds correspondant respectivement aux profils $P_3$, $P_4$ et $P_5$. Les débits vidéo respectifs des profils $P_3$, $P_4$ et $P_5$ sont 1512 kbps, 1123 kbps et 1063 kbps. Le seul arc ayant pour origine le nœud correspondant au profil $P_1$ conservé dans le graphe orienté illustré en **Figure 6A** est donc l'arc ayant pour extrémité le nœud correspondant au profil $P_5$.

On obtient ainsi les groupes suivants en répertoriant les différents chemins possibles :

TABLEAU 5

| Groupes de profils | Profils ordonnés |
|---|---|
| $G_4$ | $P_1$, $P_5$, $P_{10}$ |
| $G_5$ | $P_2$, $P_5$, $P_{10}$ |
| $G_6$ | $P_3$, $P_7$ |
| $G_7$ | $P_4$, $P_{10}$ |
| $G_8$ | $P_5$, $P_{10}$ |
| $G_9$ | $P_6$, $P_{11}$ |
| $G_{10}$ | $P_7$ |
| $G_{11}$ | $P_9$ |
| $G_{12}$ | $P_{10}$ |
| $G_{13}$ | $P_{11}$ |

Si, en outre, la vérification de la deuxième condition prédéterminée par un groupe de profils implique que le groupe de profils en question comprend au moins un profil caractérisé par une résolution supérieure ou égale à une résolution minimale prédéterminée, par exemple une résolution de 1920*1080, seuls les groupes $G_4$ et $G_5$ sont susceptibles d'être sélectionnés. Néanmoins, étant donné que les groupes $G_4$ et $G_5$ diffèrent uniquement d'un profil, $P_1$ pour le groupe $G_4$ et $P_2$ pour le groupe $G_5$, le groupe $G_5$ est préférentiellement sélectionné puisque le débit vidéo du profil $P_2$, à savoir 2258 kbps, est inférieur au débit vidéo du profil $P_1$, à savoir 2955 kbps. Sur la **Figure 6A,** le chemin correspondant au groupe $G_5$ sélectionné est tracé en trait continu, alors que les chemins correspondant aux autres groupes sont tracés en trait discontinu.

Dans un autre mode de réalisation, il est possible que la deuxième condition prédéterminée concerne en outre un nombre de profils compris dans le ou les groupes de profils à sélectionner, de sorte que le ou les groupes de profils doivent par exemple avoir exactement deux profils. Dans le cas décrit ici, les groupes sélectionnés par le module de sélection 5 sont alors les groupes $G_6$, $G_7$, $G_8$ et $G_9$.

Alternativement ou parallèlement, la vérification de la deuxième condition prédéterminée par un groupe de profils implique que le groupe de profils en question permet de minimiser une distorsion totale des profils du groupe de profils. Un exemple de mise en œuvre de l'étape S5 selon cette deuxième condition prédéterminée est illustré sur la **Figure 6B.**

En effet, comme expliqué précédemment, il est tout à fait possible que la deuxième condition prédéterminée corresponde à la vérification par un groupe de profils de plusieurs critères pris en combinaison. Cette combinaison de critères et de conditions permet une sélection plus fine du ou des groupes de profils.

Sur ce graphe orienté illustré en **Figure 6B,** pour tout nœud de demi-degré extérieur strictement supérieur à 1, c'est à dire chaque nœud étant l'origine d'au moins deux arcs, seul l'arc menant au profil de distorsion minimale a été conservé.

Par exemple, en référence à la **Figure 5,** le nœud correspondant au profil $P_5$ est l'origine de deux arcs menant aux nœuds correspondant respectivement aux profils $P_7$ et $P_9$. Les distorsions respectives des profils $P_7$ et $P_9$ sont 75 dB et 79 dB. Le seul arc ayant pour origine le nœud correspondant au profil $P_5$ conservé dans le graphe orienté en **Figure 6B** est donc l'arc ayant pour extrémité le nœud correspondant au profil $P_7$.

On obtient ainsi les groupes suivants :

TABLEAU 6

| Groupes de profils | Profils ordonnés |
|---|---|
| $G_{14}$ | $P_1, P_3, P_6, P_{11}$ |
| $G_{15}$ | $P_2, P_4, P_7$ |
| $G_{16}$ | $P_3, P_6, P_{11}$ |
| $G_{17}$ | $P_4, P_7$ |
| $G_{18}$ | $P_5, P_7$ |
| $G_{19}$ | $P_6, P_{11}$ |
| $G_{20}$ | $P_7$ |
| $G_{21}$ | $P_9$ |
| $G_{22}$ | $P_{10}$ |
| $G_{23}$ | $P_{11}$ |

Si, en outre, la vérification de la deuxième condition prédéterminée par un groupe de profils implique que le groupe de profils en question comprend au moins un profil caractérisé par une résolution supérieure ou égale à une résolution minimale prédéterminée, par exemple une résolution de 1920*1080, seuls les groupes $G_{14}$ et $G_{15}$ sont susceptibles d'être sélectionnés. Néanmoins, étant donné que le profil de plus haute résolution de $G_{14}$, à savoir $P_1$, a une distorsion de 24 dB inférieure à la distorsion du profil de plus haute résolution de $G_{15}$, à savoir $P_2$ dont la distorsion est de 32 dB, le groupe $G_{14}$ est préférentiellement sélectionné par le module de sélection 5. Sur la **Figure 6A,** le chemin correspondant au groupe $G_{14}$ sélectionné est tracé en trait continu, alors que les chemins correspondant aux autres groupes sont tracés en trait discontinu.

Dans un autre mode de réalisation, il est possible que la deuxième condition prédéterminée concerne en outre un nombre de profils compris dans le ou les groupes de profils à sélectionner, de sorte que le ou les groupes de profils doivent par exemple avoir exactement trois profils. Dans le cas décrit ici, les groupes sélectionnés par le module de sélection 5 sont donc les groupes $G_{15}$ et $G_{16}$.

Dans la description, la deuxième condition prédéterminée a été présentée comme s'appliquant consécutivement à la première condition prédéterminée, puisque la première condition prédéterminée permet de former un ou plusieurs groupes de profils tandis que la deuxième condition prédéterminée permet de sélectionner au moins un groupe de profils parmi les groupes formés. Néanmoins, l'homme du métier pourra constater que dans certains cas, les première et deuxième conditions prédéterminées peuvent s'appliquer conjointement ou parallèlement. A titre d'exemple, lorsque la deuxième condition prédéterminée prévoit qu'un profil sélectionné doit comprendre un profil caractérisé par une résolution supérieure ou égale à une résolution maximale, il est bien évident que cette condition peut porter sur la formation des profils en excluant d'emblée les groupes de profils qui ne comprendraient pas un profil caractérisé par une telle résolution.

La présente invention présente plusieurs avantages.

Tout d'abord, le procédé de sélection d'au moins un groupe de profils et l'encodage du contenu multimédia selon chacun des profils permet, lors de la diffusion du contenu multimédia, une transition presque imperceptible d'un profil à un autre. Cette transition plus douce est obtenue par la condition prédéterminée vérifiée par un profil et son successeur immédiat dans le groupe de profils. Par exemple, lorsque le ratio de débit vidéo entre un profil et son successeur est compris entre un seuil minimal de ratio de débit vidéo et un seuil maximal de ratio de débit vidéo, le passage d'un profil à un autre sera moins visible lors de la lecture du contenu multimédia.

D'autre part, le procédé décrit permet à la fois d'éviter de stocker un nombre trop important de versions d'un même contenu multimédia tout en offrant aux clients une diversité de profils adaptée aux variations éventuelles des conditions de téléchargement ou de lecture du contenu multimédia, ainsi qu'aux contraintes matérielles.

Enfin, la possibilité de sélectionner un groupe comprenant un profil d'une résolution supérieure ou égale à une résolution minimale permet également d'assurer au client la possibilité d'accéder à la meilleure qualité possible pour la lecture du contenu multimédia. D'ailleurs, la minimisation de la distorsion totale du ou des groupes de profils sélectionnés permet également d'optimiser la qualité proposée aux clients.

**Revendications**

1. Procédé mis en œuvre par des moyens informatiques en vue d'encoder numériquement un contenu multimédia (M) en un ou plusieurs flux vidéo pour une diffusion à la demande à au moins un terminal de réception, le procédé comprenant les étapes suivantes :

   - à partir d'un ensemble donné de profils, chaque profil étant **caractérisé par** une valeur d'au moins un paramètre d'encodage, former (S4) un ou plusieurs groupes ordonnés de profils, un même profil pouvant être présent dans plusieurs groupes, de sorte que, dans chaque groupe, chaque profil et son successeur immédiat vérifient une première condition prédéterminée, et
   - sélectionner (S5) parmi les groupes formés au moins un groupe de profils vérifiant une deuxième condition prédéterminée,
   dans lequel l'étape de formation d'un ou plusieurs groupes ordonnés de profils comprend :
   - construire (S41) un graphe orienté comprenant un ensemble de nœuds et un ensemble d'arcs de sorte que chaque nœud correspond à un profil de l'ensemble de profils, et de sorte qu'un premier nœud est relié à un second nœud par un arc, ledit arc ayant ledit premier nœud pour origine et ledit second nœud pour extrémité, si et seulement si les profils respectivement associés auxdits premier et second nœuds vérifient la première condition prédéterminée,
   - sélectionner (S42) un ou plusieurs chemins dudit graphe orienté de sorte que chaque chemin comprend un nœud de demi-degré extérieur nul, et
   - former (S43) un ou plusieurs groupes ordonnés de profils, chaque groupe correspondant à un chemin sélectionné, de sorte qu'un profil et son successeur correspondent respectivement à un premier nœud et à un deuxième nœud reliés par un arc.

2. Procédé selon la revendication 1, dans lequel la première condition prédéterminée est relative à une continuité entre chaque profil et son successeur immédiat, ladite continuité concernant des valeurs de paramètre d'encodage respectives dudit profil et dudit successeur immédiat.

3. Procédé selon la revendication 1 ou 2, dans lequel l'étape de formation d'un ou plusieurs groupes de profils est mise en œuvre de sorte que, dans chaque groupe de profils formé, chaque profil a nécessairement un prédécesseur et un successeur sauf en cas d'impossibilité liée à la première condition prédéterminée.

4. Procédé selon l'une des revendications précédentes, dans lequel un profil est **caractérisé par** deux valeurs de paramètre d'encodage : une résolution et un débit vidéo.

5. Procédé selon la revendication 4, dans lequel une valeur de distorsion est associée à tout couple de valeurs de résolution et de débit vidéo, ladite distorsion étant représentative d'une qualité vidéo obtenue après encodage du contenu multimédia selon le profil **caractérisé par** lesdites valeurs de résolution et de débit vidéo en un flux vidéo et décodage dudit flux vidéo.

6. Procédé selon la revendication 5, dans lequel l'étape de formation d'un ou plusieurs groupes ordonnés de profils est précédée d'une étape de filtrage (S3) comprenant :

   - classer les profils de l'ensemble de profils par ordre décroissant de résolution de sorte que, si un ou plusieurs profils ont une même résolution, ces profils sont ordonnés entre eux par ordre décroissant de débit et/ou par ordre croissant de distorsion, et
   - si, après classement, un premier profil est classé avant un deuxième profil de sorte que le deuxième profil a un débit vidéo supérieur au premier profil ou une distorsion inférieure au premier profil, supprimer ledit deuxième profil de l'ensemble de profils.

7. Procédé selon la revendication 5 ou 6, dans lequel la vérification de la première condition prédéterminée par un profil et son successeur immédiat dans un groupe de profils implique au moins que la résolution dudit successeur est inférieure ou égale à la résolution dudit profil, que le débit vidéo dudit successeur est inférieur ou égal au débit vidéo dudit profil, et que la distorsion dudit successeur est supérieure ou égale à la distorsion dudit profil.

**8.** Procédé selon l'une des revendications précédentes, dans lequel chaque profil est caractérisé au moins par un débit vidéo, et la vérification de la première condition prédéterminée par un profil et son successeur immédiat dans un groupe de profils implique au moins que le ratio du débit vidéo dudit profil et du débit vidéo dudit successeur est supérieur ou égal à un seuil minimal de ratio de débit vidéo et est inférieur ou égal à un seuil maximal de ratio de débit vidéo.

**9.** Procédé selon l'une des revendications précédentes, dans lequel une qualité vidéo obtenue après encodage du contenu multimédia en un flux vidéo selon un profil donné et décodage dudit flux vidéo est **caractérisée par** une distorsion, et la vérification de la première condition prédéterminée par un profil et son successeur immédiat dans un groupe de profils implique au moins que le ratio de la distorsion dudit profil et de la distorsion dudit successeur est supérieur ou égal à un seuil minimal de ratio de distorsion et est inférieur ou égal à un seuil maximal de ratio de distorsion.

**10.** Procédé selon l'une des revendications précédentes, dans lequel la vérification de la deuxième condition prédéterminée par un groupe de profils implique au moins que ledit groupe de profils comprend au moins un profil **caractérisé par** une valeur de paramètre vérifiant une contrainte de seuil dudit paramètre.

**11.** Procédé selon la revendication 10, dans lequel :

- l'au moins un profil est **caractérisé par** une résolution, et la vérification de la contrainte de seuil par ledit au moins un profil implique que ladite résolution de l'au moins un profil est supérieure ou égale à une résolution minimale prédéterminée, et/ou
- l'au moins un profil est **caractérisé par** une résolution, et la vérification de la contrainte de seuil par ledit au moins un profil implique que ladite résolution de l'au moins un profil est inférieure ou égale à une résolution maximale prédéterminée, et/ou
- l'au moins un profil est **caractérisé par** un débit vidéo, et la vérification de la contrainte de seuil par ledit au moins un profil implique que ledit débit vidéo de l'au moins un profil est supérieur ou égal à un débit minimal prédéterminé, et/ou
- l'au moins un profil est **caractérisé par** un débit vidéo, et la vérification de la contrainte de seuil par ledit au moins un profil implique que ledit débit vidéo de l'au moins un profil est inférieur ou égal à un débit maximal prédéterminé.

**12.** Procédé selon l'une des revendications précédentes, dans lequel la vérification de la deuxième condition prédéterminée par un groupe de profils implique au moins que ledit groupe de profils permet de minimiser une valeur totale de paramètre des profils dudit groupe de profils.

**13.** Procédé selon la revendication 12, dans lequel la valeur totale de paramètre à minimiser est un débit vidéo.

**14.** Procédé selon l'une des revendications précédentes, dans lequel une qualité vidéo obtenue après encodage du contenu multimédia en un flux vidéo selon un profil donné et décodage dudit flux vidéo est **caractérisée par** une distorsion, et la vérification de la deuxième condition prédéterminée par un groupe de profils implique au moins que ledit groupe de profils permet de minimiser une distorsion totale des profils dudit groupe de profils.

**15.** Procédé selon l'une des revendications précédentes, dans lequel la deuxième condition prédéterminée concerne au moins un nombre de profils compris dans l'au moins un groupe de profils à sélectionner.

**16.** Procédé selon l'une des revendications précédentes, dans lequel l'étape de formation d'un ou plusieurs groupes de profils est précédée des étapes suivantes :

- analyser (S2) une qualité vidéo obtenue après encodage du contenu multimédia en un flux vidéo puis décodage dudit flux vidéo, ces opérations d'encodage et de décodage (S1) étant répétées pour différentes valeurs d'au moins un paramètre d'encodage, et
- générer (S2) un ensemble de profils en fonction de l'analyse de qualité vidéo, chaque profil étant **caractérisé par** une valeur de l'au moins un paramètre d'encodage.

**17.** Procédé selon l'une des revendications précédentes, dans lequel l'étape de sélection d'au moins un groupe de profils est suivie d'une étape d'encodage (S6) du contenu multimédia en un ou plusieurs flux vidéo, chaque flux vidéo étant obtenu par encodage dudit contenu multimédia selon un profil de l'au moins un groupe de profils sélectionné.

18. Programme informatique comprenant des instructions pour la mise en œuvre du procédé selon l'une des revendications précédentes, lorsque lesdites instructions sont exécutées par au moins un processeur (17, 21, 27, 37).

19. Système (1), comprenant un module de sélection (5) d'au moins un groupe de profils d'encodage d'un contenu multimédia (M), chaque profil étant **caractérisé par** une valeur d'au moins un paramètre d'encodage, en vue d'encoder numériquement ledit contenu multimédia en un ou plusieurs flux vidéo pour une diffusion à la demande à au moins un terminal de réception, ledit module de sélection étant agencé pour former, à partir d'un ensemble donné de profils, un ou plusieurs groupes ordonnés de profils, un même profil pouvant être présent dans plusieurs groupes, de sorte que, dans chaque groupe, chaque profil et son successeur immédiat vérifient une première condition prédéterminée, ledit module de sélection étant agencé en outre pour sélectionner parmi les groupes formés au moins un groupe de profils vérifiant une deuxième condition prédéterminée,
dans lequel, pour la formation d'un ou plusieurs groupes ordonnés de profils, ledit module de sélection est agencé en outre pour :

- construire (S41) un graphe orienté comprenant un ensemble de nœuds et un ensemble d'arcs de sorte que chaque nœud correspond à un profil de l'ensemble de profils, et de sorte qu'un premier nœud est relié à un second nœud par un arc, ledit arc ayant ledit premier nœud pour origine et ledit second nœud pour extrémité, si et seulement si les profils respectivement associés auxdits premier et second nœuds vérifient la première condition prédéterminée,
- sélectionner (S42) un ou plusieurs chemins dudit graphe orienté de sorte que chaque chemin comprend un nœud de demi-degré extérieur nul, et
- former (S43) un ou plusieurs groupes ordonnés de profils, chaque groupe correspondant à un chemin sélectionné, de sorte qu'un profil et son successeur correspondent respectivement à un premier nœud et à un deuxième nœud reliés par un arc.

## Patentansprüche

1. Von Datenverarbeitungseinrichtungen durchgeführtes Verfahren zur digitalen Kodierung eines Multimedia-Inhalts (M) in einen oder mehrere Video-Streams für eine Sendung auf Anfrage zu mindestens einem Empfangsendgerät, wobei das Verfahren die folgenden Schritte aufweist:

- ausgehend von einer gegebenen Gesamtheit von Profilen, wobei jedes Profil durch einen Wert mindestens eines Kodierungsparameters gekennzeichnet ist, Bilden (S4) einer oder mehrerer geordneter Profilgruppen, wobei ein und dasselbe Profil in mehreren Gruppen vorhanden sein kann, derart, dass in jeder Gruppe jedes Profil und sein unmittelbarer Nachfolger eine erste vorgegebene Bedingung verifizieren, und
- Auswählen (S5) mindestens einer Profilgruppe aus den gebildeten Gruppen, die eine zweite vorgegebene Bedingung verifiziert,
in welchem der Schritt der Bildung einer oder mehrerer geordneter Profilgruppen aufweist:
- Konstruieren (S41) einer orientierten Grafik, die eine Gesamtheit von Knoten und eine Gesamtheit von Bögen aufweist, derart, dass jeder Knoten einem Profil der Gesamtheit von Profilen entspricht, und derart, dass ein erster Knoten über einen Bogen mit einem zweiten Knoten verbunden ist, wobei der Bogen den ersten Knoten als Ursprung und den zweiten Knoten als Ende hat, dann und nur dann, wenn die mit dem ersten und zweiten Knoten jeweils verknüpften Profile die erste vorgegebene Bedingung verifizieren,
- Auswählen (S42) eines oder mehrerer Wege der orientierten Graphik derart, dass jeder Weg einen Knoten halber Außenseite Null aufweist, und
- Bilden (S43) einer oder mehrerer geordneter Profilgruppen, wobei jede Gruppe einem ausgewählten Weg entspricht, derart, dass ein Profil und sein Nachfolger jeweils einem ersten Knoten und einem zweiten Knoten, die über einen Bogen miteinander verbunden sind, entsprechen.

2. Verfahren nach Anspruch 1, in welchem die erste vorgegebene Bedingung sich auf eine Kontinuität zwischen jedem Profil und seinem unmittelbaren Nachfolger bezieht, wobei die Kontinuität jeweilige Kodierungsparameterwerte des Profils und des unmittelbaren Nachfolgers betreffen.

3. Verfahren nach Anspruch 1 oder 2, in welchem die Bildung einer oder mehrerer Profilgruppen derart durchgeführt wird, dass in jeder gebildeten Profilgruppe jedes Profil zwingend notwendig einen Vorgänger und einen Nachfolger hat, ausgenommen im Falle einer Unmöglichkeit, die mit der ersten vorgegebenen Bedingung verknüpft ist.

4. Verfahren nach einem der vorstehenden Ansprüche, in welchem ein Profil durch zwei Kodierungsparameterwerte gekennzeichnet ist: eine Auflösung und eine Videodatenrate.

5. Verfahren nach Anspruch 4, in welchem jedem Paar, gebildet aus Wert der Auflösung und Wert der Videodatenrate, ein Verzeichnungswert zugeordnet ist, wobei die Verzeichnung eine Videoqualität repräsentiert, die man nach Kodierung des Multimedia-Inhalts gemäß dem durch die Werte der Auflösung und der Videodatenrate gekennzeichneten Profil in einen Videostream und Dekodierung des Videostreams bekommt.

6. Verfahren nach Anspruch 5, in welchem dem Schritt der Bildung einer oder mehrerer geordneter Profilgruppen ein Schritt einer Filterung (S3) vorausgeht, aufweisend:

   - Sortieren der Profile der Gesamtheit von Profilen in einer absteigender Reihenfolge der Auflösung derart, dass, falls ein oder mehrere Profile eine gleiche Auflösung haben, diese Profile untereinander in absteigender Reihenfolge der Datenrate und/oder aufsteigender Reihenfolge der Verzeichnung geordnet werden, und
   - falls nach der Sortierung ein erstes Profil vor einem zweiten Profil derart sortiert ist, dass das zweite Profil eine größere Videodatenrate als das erste Profil oder eine geringere Verzeichnung als das erste Profil hat, Beseitigen des zweiten Profils aus der Gesamtheit von Profilen.

7. Verfahren nach Anspruch 5 oder 6, in welchem die Verifikation der ersten vorgegebenen Bedingung durch ein Profil und seinen unmittelbaren Nachfolger in einer Profilgruppe mindestens impliziert, dass die Auflösung des Nachfolgers geringer oder gleich der Auflösung des Profils ist, dass die Videodatenrate des Nachfolgers kleiner oder gleich der Videodatenrate des Profils ist, und dass die Verzeichnung des Nachfolgers größer oder gleich der Verzeichnung des Profils ist.

8. Verfahren nach einem der vorstehenden Ansprüche, in welchem jedes Profil mindestens durch eine Videodatenrate gekennzeichnet ist, und die Verifikation der ersten vorgegebenen Bedingung durch ein Profil und seinen unmittelbaren Nachfolger in einer Profilgruppe mindestens impliziert, dass das Verhältnis der Videodatenrate des Profils und der Videodatenrate des Nachfolgers größer oder gleich einer minimalen Schwelle des Videodatenrate-Verhältnisses ist und kleiner oder gleich einer maximalen Schwelle des Videodatenrate-Verhältnisses ist.

9. Verfahren nach einem der vorstehenden Ansprüche, in welchem eine Videoqualität, die man nach Kodierung des Multimedia-Inhalts gemäß einem gegebenen Profil in einen Videostream und einer Dekodierung des Videostream bekommt, durch eine Verzeichnung gekennzeichnet ist, und die Verifikation der ersten vorgegebenen Bedingung durch ein Profil und seinen unmittelbaren Nachfolger in einer Profilgruppe mindestens impliziert, dass das Verhältnis der Verzeichnung des Profils und der Verzeichnung des Nachfolgers größer oder gleich einer minimalen Schwelle des Verzeichnungsverhältnisses ist und kleiner oder gleich einer maximalen Schwelle des Verzeichnungsverhältnisses ist.

10. Verfahren nach einem der vorstehenden Ansprüche, in welchem die Verifikation der zweiten vorgegebenen Bedingung durch eine Profilgruppe mindestens impliziert, dass die Profilgruppe mindestens ein Profil aufweist, das durch einen Parameterwert gekennzeichnet ist, der eine Schwellenbeschränkung des Parameters verifiziert.

11. Verfahren nach Anspruch 10, in welchem:

   - das mindestens eine Profil durch eine Auflösung gekennzeichnet ist, und die Verifikation der Schwellenbeschränkung durch das mindestens eine Profil impliziert, dass die Auflösung des mindestens einen Profils höher oder gleich einer vorgegebenen minimalen Auflösung ist, und/oder
   - das mindestens eine Profil durch eine Auflösung gekennzeichnet ist, und die Verifikation der Schwellenbeschränkung durch das mindestens eine Profil impliziert, dass die Auflösung des mindestens einen Profils geringer oder gleich einer vorgegebenen maximalen Auflösung ist, und/oder
   - das mindestens eine Profil durch eine Videodatenrate gekennzeichnet ist, und die Verifikation der Schwellenbeschränkung durch das mindestens eine Profil impliziert, dass die Videodatenrate des mindestens einen Profils größer oder gleich einer vorgegebenen minimalen Videodatenrate ist, und/oder
   - das mindestens eine Profil durch eine Videodatenrate gekennzeichnet ist, und die Verifikation der Schwellenbeschränkung durch das mindestens eine Profil impliziert, dass die Videodatenrate des mindestens einen Profils kleiner oder gleich einer vorgegebenen maximalen Videodatenrate ist.

**12.** Verfahren nach einem der vorstehenden Ansprüche, in welchem die Verifikation der zweiten vorgegebenen Bedingung durch eine Profilgruppe mindestens impliziert, dass die Profilgruppe erlaubt, einen Parametergesamtwert der Profile der Profilgruppe zu minimieren.

**13.** Verfahren nach Anspruch 12, in welchem der zu minimierende Parametergesamtwert eine Videodatenrate ist.

**14.** Verfahren nach einem der vorstehenden Ansprüche, in welchem eine Videoqualität, die man nach Kodierung des Multimedia-Inhalts gemäß einem gegebenen Profil in einen Videostream und einer Dekodierung des Videostreams bekommt, durch eine Verzeichnung gekennzeichnet ist, und die Verifikation der zweiten vorgegebenen Bedingung durch eine Profilgruppe mindestens impliziert, dass die Profilgruppe erlaubt, eine Gesamtverzeichnung der Profile der Profilgruppe zu minimieren.

**15.** Verfahren nach einem der vorstehenden Ansprüche, in welchem die zweite vorgegebene Bedingung sich mindestens auf einen Zahlenwert bezieht, der die in der mindestens einen auszuwählenden Profilgruppe enthaltene Anzahl von Profilen angibt.

**16.** Verfahren nach einem der vorstehenden Ansprüche, in welchem der Bildung einer oder mehrerer Profilgruppen die folgenden Schritte vorausgehen:

- Analysieren (S2) einer Videoqualität, die man nach Kodierung des Multimedia-Inhalts in einen Videostream und dann Dekodierung des Videostreams bekommt, wobei die Kodierungs- und Dekodierungsoperationen (S1) für verschiedene Werte mindestens eines Kodierungsparameters wiederholt werden, und
- Generieren (S2) einer Gesamtheit von Profilen als Funktion der Analyse der Videoqualität, wobei jedes Profil durch einen Wert des mindestens einen Kodierungsparameters gekennzeichnet ist.

**17.** Verfahren nach einem der vorstehenden Ansprüche, in welchem der Schritt der Auswahl mindestens einer Profilgruppe gefolgt wird von einem Schritt einer Kodierung (S6) des Multimedia-Inhalts in einen oder mehrere Videostreams, wobei man jeden Videostream durch Kodierung des Multimedia-Inhalts gemäß einem Profil der mindestens einen ausgewählten Profilgruppe bekommt.

**18.** Datenverarbeitungsprogramm aufweisend Befehle zur Durchführung des Verfahrens nach einem der vorstehenden Ansprüche, wenn die Befehle von mindestens einem Prozessor (17, 21, 27, 37) ausgeführt werden.

**19.** System (1), aufweisend ein Auswahlmodul (5) zum Auswählen mindestens einer Profilgruppe zur Kodierung eines Multimedia-Inhalts (M), wobei jedes Profil durch einen Wert mindestens eines Kodierungsparameters gekennzeichnet ist, in Hinblick auf eine digitalen Kodierung eines Multimedia-Inhalts in einen oder mehrere Videostreams für eine Sendung auf Anfrage zu mindestens einem Empfangsendgerät, wobei das Auswahlmodul konfiguriert ist, um ausgehend von einer gegebenen Gesamtheit von Profilen eine oder mehrere geordnete Profilgruppen zu bilden, wobei ein und dasselbe Profil in mehreren Gruppen vorhanden sein kann, derart, dass in jeder Gruppe jedes Profil und sein unmittelbarer Nachfolger eine erste vorgegebene Bedingung verifizieren, wobei das Auswahlmodul ferner konfiguriert ist, aus den gebildeten Gruppen mindestens eine Profilgruppe auszuwählen, die eine zweite vorgegebene Bedingung verifiziert,
in welchem für die Bildung einer oder mehrerer geordneter Profilgruppen das Auswahlmodul ferner konfiguriert ist zum:

- Konstruieren (S41) einer orientierten Grafik, die eine Gesamtheit von Knoten und eine Gesamtheit von Bögen aufweist, derart, dass jeder Knoten einem Profil der Gesamtheit von Profilen entspricht, und derart, dass ein erster Knoten über einen Bogen mit einem zweiten Knoten verbunden ist, wobei der Bogen den ersten Knoten als Ursprung und den zweiten Knoten als Ende hat, dann und nur dann, wenn die mit dem ersten und zweiten Knoten jeweils verknüpften Profile die erste vorgegebene Bedingung verifizieren,
- Auswählen (S42) eines oder mehrerer Wege der orientierten Graphik derart, dass jeder Weg einen Knoten halber Außenseite Null aufweist, und
- Bilden (S43) einer oder mehrerer geordneter Profilgruppen, wobei jede Gruppe einem ausgewählten Weg entspricht, derart, dass ein Profil und sein Nachfolger jeweils einem ersten Knoten und einem zweiten Knoten, die über einen Bogen miteinander verbunden sind, entsprechen.

**Claims**

1.  A method, implemented by computer means, for digitally encoding a multimedia content (M) into one or more video streams for on-demand distribution to at least one receiving terminal, the method comprising the following steps:

    - based on a given set of profiles, each profile being **characterized by** a value of at least one encoding parameter, forming (S4) one or more ordered groups of profiles, a same profile being able to be present in multiple groups, such that in each group, each profile and its immediate successor satisfy a first predetermined condition, and
    - selecting (S5) from the formed groups at least one group of profiles satisfying a second predetermined condition, wherein the step of forming one or more ordered groups of profiles comprises:
    - constructing (S41) a directed graph comprising a set of nodes and a set of arcs such that each node corresponds to a profile in the set of profiles, and such that a first node is connected to a second node by an arc, said arc having said first node as its origin and said second node as its end point, if and only if the profiles respectively associated with said first and second nodes satisfy the first predetermined condition,
    - selecting (S42) one or more paths of said directed graph such that each path comprises a node of zero outdegree, and
    - forming (S43) one or more ordered groups of profiles, each group corresponding to a selected path, such that a profile and its successor respectively correspond to a first node and a second node connected by an arc.

2.  The method according to claim 1, wherein the first predetermined condition relates to a continuity between each profile and its immediate successor, said continuity concerning respective encoding parameter values of said profile and said immediate successor.

3.  The method according to claim 1 or claim 2, wherein the step of forming one or more groups of profiles is implemented such that, in each formed group of profiles, each profile necessarily has a predecessor and a successor except in a case of impossibility related to the first predetermined condition.

4.  The method according to one of the preceding claims, wherein a profile is **characterized by** two encoding parameter values: a resolution and a video bitrate.

5.  The method according to claim 4, wherein a distortion value is associated with each pair of values for the resolution and video bitrate, said distortion being representative of a video quality obtained after encoding the multimedia content according to the profile **characterized by** said values for the resolution and video bitrate into a video stream and decoding said video stream.

6.  The method according to claim 5, wherein the step of forming one or more ordered groups of profiles is preceded by a filtering step (S3) comprising:

    - ordering the profiles of the set of profiles by descending order of resolution, such that if one or more profiles have the same resolution, these profiles are ordered by descending order of bitrate and/or by increasing order of distortion, and
    - if, after ordering, a first profile precedes a second profile such that the second profile has a video bitrate higher than the first profile or a distortion lower than the first profile, deleting said second profile from the set of profiles.

7.  The method according to claim 5 or claim 6, wherein the satisfying of the first predetermined condition by a profile and its immediate successor in a group of profiles at least implies that the resolution of said successor is less than or equal to the resolution of said profile, that the video bitrate of said successor is less than or equal to the video bitrate of said profile, and that the distortion of said successor is greater than or equal to the distortion of said profile.

8.  The method according to one of the preceding claims, wherein each profile is characterized at least by a video bitrate, and the satisfying of the first predetermined condition by a profile and its immediate successor in a group of profiles at least implies that the ratio of the video bitrate of said profile and of the video bitrate of said successor is greater than or equal to a minimum video bitrate threshold and is less than or equal to a maximum video bitrate threshold.

9.  The method according to one of the preceding claims, wherein a video quality obtained after encoding the multimedia content into a video stream according to a given profile and decoding said video stream is **characterized by** a distortion, and the satisfying of the first predetermined condition by a profile and its immediate successor in a group of profiles at least implies that the ratio of the distortion of said profile and the distortion of said successor is greater than or equal to a minimum distortion ratio threshold and is less than or equal to a maximum distortion ratio threshold.

10. The method according to one of the preceding claims, wherein the satisfying of the second predetermined condition by a group of profiles at least implies that said group of profiles comprises at least one profile **characterized by** a parameter value satisfying a threshold constraint on said parameter.

11. The method according to claim 10, wherein:

- the at least one profile is **characterized by** a resolution, and the satisfying of the threshold constraint by said at least one profile implies that said resolution of the at least one profile is greater than or equal to a predetermined minimum resolution, and/or
- the at least one profile is **characterized by** a resolution, and the satisfying of the threshold constraint by said at least one profile implies that said resolution of the at least one profile is less than or equal to a predetermined maximum resolution, and/or
- the at least one profile is **characterized by** a video bitrate, and the satisfying of the threshold constraint by said at least one profile implies that said video bitrate of the at least one profile is greater than or equal to a predetermined minimum bitrate, and/or
- the at least one profile is **characterized by** a video bitrate, and the satisfying of the threshold constraint by said at least one profile implies that said video bitrate of the at least one profile is less than or equal to a predetermined maximum bitrate.

12. The method according to one of the preceding claims, wherein the satisfying of the second predetermined condition by a group of profiles at least implies that said group of profiles makes it possible to minimize a total parameter value of the profiles of said group of profiles.

13. The method according to claim 12, wherein the total parameter value to be minimized is a video bitrate.

14. The method according to one of the preceding claims, wherein a video quality obtained after encoding the multimedia content into a video stream according to a given profile and decoding said video stream is **characterized by** a distortion, and the satisfying of the second predetermined condition by a group of profiles at least implies that said group of profiles makes it possible to minimize a total distortion of the profiles of said group of profiles.

15. The method according to one of the preceding claims, wherein the second predetermined condition relates at least to a number of profiles comprised in the at least one group of profiles to be selected.

16. The method according to one of the preceding claims, wherein the step of forming one or more groups of profiles is preceded by the following steps:

- analyzing (S2) a video quality obtained after encoding the multimedia content into a video stream and then decoding said video stream, these encoding and decoding operations (S1) being repeated for different values of at least one encoding parameter, and
- generating (S2) a set of profiles according to the video quality analysis, each profile being **characterized by** a value of the at least one encoding parameter.

17. The method according to one of the preceding claims, wherein the step of selecting at least one group of profiles is followed by a step of encoding (S6) the multimedia content into one or more video streams, each video stream being obtained by encoding said multimedia content according to a profile from the at least one selected group of profiles.

18. A computer program comprising instructions for implementing the method according to one of the preceding claims, when said instructions are executed by at least one processor (17, 21, 27, 37).

19. A system (1), comprising a module (5) for selecting at least one group of profiles for encoding a multimedia content (M), each profile being **characterized by** a value of at least one encoding parameter, in order to digitally encode said multimedia content into one or more video streams for on-demand distribution to at least one receiving terminal, said selection module being arranged to form, based on a given set of profiles, one or more ordered groups of profiles, it being possible for a same profile to be present in multiple groups, such that in each group, each profile and its immediate successor satisfy a first predetermined condition, said selection module being further arranged to select from the formed groups at least one group of profiles satisfying a second predetermined condition, wherein, for the forming of one or more ordered groups of profiles, said selection module is further arranged for:

- constructing (S41) a directed graph comprising a set of nodes and a set of arcs such that each node corresponds to a profile in the set of profiles, and such that a first node is connected to a second node by an arc, said arc having said first node as its origin and said second node as its end point, if and only if the profiles respectively associated with said first and second nodes satisfy the first predetermined condition,
- selecting (S42) one or more paths of said directed graph such that each path comprises a node of zero outdegree, and
- forming (S43) one or more ordered groups of profiles, each group corresponding to a selected path, such that a profile and its successor respectively correspond to a first node and a second node connected by an arc.

FIG. 1

FIG. 2

EP 3 540 627 B1

```
┌─────────────────┐
│    ENC / DEC    │── S1
└─────────────────┘
         │
┌─────────────────┐
│     ANALY       │── S2
└─────────────────┘
         │
┌─────────────────┐
│     FILTR       │── S3
└─────────────────┘
         │
┌─────────────────┐
│     FORM        │── S4
└─────────────────┘
         │
┌─────────────────┐
│     SELEC       │── S5
└─────────────────┘
         │
┌─────────────────┐
│     ENC         │── S6
└─────────────────┘
         │
┌─────────────────┐
│     DIFF        │── S7
└─────────────────┘
```

**FIG. 3**

S4

```
┌─────────────────┐
│     GRAPH       │── S41
└─────────────────┘
         │
┌─────────────────┐
│     CHEM        │── S42
└─────────────────┘
         │
┌─────────────────┐
│     FORM        │── S43
└─────────────────┘
```

**FIG. 4**

FIG. 5

EP 3 540 627 B1

FIG. 6A

FIG. 6B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015074232 A1
- WO 2016022769 A1